# EUROPÄISCHE PATENTSCHRIFT

(11) **EP 3 781 079 B1**
(45) Veröffentlichungstag und Bekanntmachung des Hinweises auf die Patenterteilung: **21.12.2022**
(21) Anmeldenummer: 19720510.7
(22) Anmeldetag: 18.04.2019
(51) Int. Cl.: A61C 13/36, A61C 13/10, A61C 13/34, A61C 9/00, A61C 13/01

(54) **DENTALMODELL UND ZAHNSTUMPF FÜR EIN DENTALMODELL**
DENTAL MODEL AND STUMP OF A TOOTH FOR A DENTAL MODEL
MODÈLE DENTAIRE ET MOIGNON DENTAIRE POUR UN MODÈLE DENTAIRE

(30) Priorität: 20.04.2018 EP 18168513
(43) Veröffentlichungstag der Anmeldung: 24.02.2021
(73) Patentinhaber: Rapid Shape GmbH, 71296 Heimsheim (DE); Straumann Holding AG, 4002 Basel (CH)
(72) Erfinder: SCHULTHEISS, Andreas, 75417 Mühlacker (DE); GEITNER, Andreas, 71229 Leonberg (DE); KRAUSE, Markus, 71735 Eberdingen (DE); RÖCKL, Daniel, 81827 München (DE); SATTLER, Maximilian, 80339 München (DE); DIETZ, Sören, 85457 Wörth (DE)
(74) Vertreter: Hoeger, Stellrecht & Partner Patentanwälte mbB
(86) Internationale Anmeldenummer: PCT/EP2019/060165
(87) Internationale Veröffentlichungsnummer: WO 2019/202110

(56) Entgegenhaltungen:
- US-A1- 2002 049 009
- US-A1- 2006 003 287
- US-A1- 2013 216 980

## Beschreibung

Die vorliegende Erfindung betrifft einen Zahnstumpf für ein Dentalmodell, welches Dentalmodell mindestens einen Zahn und mindestens eine Zahnstumpfaufnahme zum mindestens teilweisen Aufnehmen des Zahnstumpfs aufweist, welcher Zahnstumpf einen Zahnabschnitt in Form eines menschlichen oder tierischen Zahnes und einen eine Kupplungsabschnittslängsachse definierenden Kupplungsabschnitt zum kraft- und/oder formschlüssigen in Eingriff Bringen mit der mindestens einen Zahnstumpfaufnahme des Dentalmodells in einer Kupplungsstellung umfasst, wobei der Zahnstumpf eine Positioniereinrichtung umfasst zum definierten räumlichen Positionieren des Zahnstumpfs in der Zahnstumpfaufnahme in der Kupplungsstellung.

Ferner betrifft die vorliegende Erfindung ein Dentalmodell, insbesondere als Arbeits- und Kontrollmodell zur Anfertigung von Zahnersatz, welches Dentalmodell einen Grundkörper mit mindestens einer Zahnstumpfaufnahme zum mindestens teilweisen Aufnehmen eines Zahnstumpfs umfasst, welche Zahnstumpfaufnahme eine Aufnahmelängsachse definiert und zum kraft- und/oder formschlüssigen in Eingriff Bringen mit dem Zahnstumpf in einer Kupplungsstellung ausgebildet ist, wobei die Zahnstumpfaufnahme eine Aufnahmepositioniereinrichtung umfasst zum definierten räumlichen Positionieren des Zahnstumpfs in der Zahnstumpfaufnahme in der Kupplungsstellung.

Des Weiteren betrifft die vorliegende Offenbarung ein Verfahren zum Herstellen eines Zahnstumpfs sowie ein Verfahren zum Herstellen eines Dentalmodells. Zahnstümpfe und Dentalmodelle der eingangs beschriebenen Arten sind beispielsweise aus der DE 10 2013 107 916 A1 sowie aus der WO 2011/103879 A1 bekannt. Derartige Dentalmodelle werden insbesondere als Arbeits- und Kontrollmodelle zur Anfertigung von Zahnersatz oder Zahnimplantaten von Zahntechnikern und Zahnärzten eingesetzt.

Ein Problem bei Dentalmodellen mit mindestens einer Zahnstumpfaufnahme zum Aufnehmen eines Zahnstumpfs ist, dass der Zahnstumpf in definierter Weise in die Zahnstumpfaufnahme eingesetzt werden muss, um ein optimales Arbeitsergebnis zu erreichen, also insbesondere ein räumlich hochpräzises Modell eines Ober- oder Unterkiefers eines Patienten mit Zähnen. Sowohl eine Orientierung des Zahnstumpfs in der Zahnstumpfaufnahme um die Kupplungsabschnittslängsachse als auch eine Einführtiefe des Zahnstumpfs in die Zahnstumpfaufnahme hinein sind dabei von Bedeutung. Insbesondere bei Herstellung der Zahnstümpfe und Dentalmodelle aus Kunststoff mittels generativer Herstellungsverfahren sind Fertigungstoleranzen praktisch unvermeidlich. Da jedoch bereits kleinste Abweichungen in der Größe sowohl beim Zahnstumpf als auch beim Dentalmodell zu einer Fehlpositionierung des Zahnstumpfs in der Zahnstumpfaufnahme führen können, ist es wünschenswert, diese Probleme zu überwinden.

Ein Kiefermodell ist aus der US 6,257,895 B1 bekannt. Dentalmodelle sind in der US 2013/0216980 A1 beschrieben. Die US 2006/0003287 A1 offenbart Zahnmodelle für dentale Trainingsvorrichtungen. In der US 2002/0049009 A1 ist eine Steckverbindung für Zahnstumpfmodelle beschrieben. Ferner ist aus der US 5,030,102 eine Montageanordnung für einen austauschbaren Zahn eines künstlichen dentalen Kiefermodells bekannt. Außerdem sind in der US 2,880,508 künstliche Zahnstrukturen beschrieben.

Es ist daher eine Aufgabe der vorliegenden Erfindung, einen Zahnstumpf sowie ein Dentalmodell so zu verbessern, dass die Passgenauigkeit des Zahnstumpfs in der Zahnstumpfaufnahme des Dentalmodells verbessert wird.

Diese Aufgabe wird bei einem Zahnstumpf für ein Dentalmodell der eingangs beschriebenen Art erfindungsgemäß dadurch gelöst, dass die Positioniereinrichtung mindestens ein am Kupplungsabschnitt ausgebildetes Positionierelement umfasst, dass das mindestens eine Positionierelement aus einer Grundstellung entgegen der Wirkung einer Rückstelleinrichtung in eine auf die Kupplungsabschnittslängsachse oder im Wesentlichen auf die Kupplungsabschnittslängsachse hin oder von dieser weg ausgelenkte Haltestellung auslenkbar ist, dass das mindestens eine Positionierelement in der Haltestellung entgegen der Wirkung der Rückstelleinrichtung aus der Grundstellung ausgelenkt ist, dass die Positioniereinrichtung mindestens ein Führungselement umfasst und dass das mindestens eine Führungselement am mindestens einen Positionierelement angeordnet oder ausgebildet ist.

Eine Positioniereinrichtung mit mindestens einem derart angeordneten und ausgebildeten Positionierelement ermöglicht es insbesondere, den Zahnstumpf in mindestens einer Raumrichtung, vorzugsweise in zwei oder allen drei Raumrichtungen, definiert in der Zahnstumpfaufnahme des Dentalmodells zu positionieren. Das mindestens eine Positionierelement ist derart angeordnet und ausgebildet, dass Fertigungstoleranzen, die zu einer Fehlpositionierung in einer Ebene quer zur Kupplungsabschnittslängsachse und/oder in einer Richtung parallel zur Kupplungsabschnittslängsachse führen, ausgeglichen werden können, indem das mindestens eine Positionierelement aus der Grundstellung entgegen der Wirkung der Rückstelleinrichtung in die ausgelenkte Haltestellung ausgelenkt werden kann. Das mindestens eine Positionierelement bildet somit insbesondere ein adaptives Positionierelement, welches den Zahnstumpf unabhängig von Fertigungstoleranzen in definierter und reproduzierbarer Weise in der Zahnstumpfaufnahme des Dentalmodells anzuordnen ermöglicht. Vorteilhaft ist es, dass die Positioniereinrichtung mindestens ein Führungselement umfasst und wenn das mindestens eine Führungselement an mindestens einem Positionierelement angeordnet oder ausgebildet ist. Mit dem mindestens einen Führungselement kann das Einführen des Zahnstumpfs in die Zahnstumpfaufnahme am Dentalmodell vereinfacht werden.

Auf besonders einfache Weise lässt sich der Zahnstumpf ausbilden, wenn die Rückstelleinrichtung mindestens ein Rückstellelement umfasst, entgegen dessen Wirkung das mindestens eine Positionierelement in die Haltestellung auslenkbar ist. Insbesondere können eins, zwei, drei, vier oder auch mehr Positionierelemente am Zahnstumpf angeordnet oder ausgebildet sein.

Günstig ist es, wenn das mindestens eine Rückstellelement federelastisch oder im Wesentlichen federelastisch ausgebildet ist. Ein Zahnstumpf mit mindestens einem solchen Rückstellelement kann einfach und sicher mehrfach reversibel mit dem Dentalmodell in Eingriff und wieder außer Eingriff gebracht werden.

Das mindestens eine Positionierelement lässt sich auf einfache Weise in die ausgelenkte Haltestellung und wieder in die Grundstellung zurück überführen, wenn das mindestens eine Positionierelement federnd am Kupplungsabschnitt gehalten oder ausgebildet oder gelagert ist. Beispielsweise kann hier ein federbelastetes Gelenk vorgesehen sein.

Besonders einfach und kompakt lässt sich der Zahnstumpf ausbilden, wenn das mindestens eine Positionierelement das mindestens eine Rückstellelement umfasst oder bildet.

Um insbesondere eine Positionierung des Zahnstumpfs in einer Ebene quer zu Kupplungsabschnittslängsachse einfach und sicher realisieren zu können, ist es vorteilhaft, wenn das mindestens eine Positionierelement um eine parallel oder quer, insbesondere senkrecht, zur Kupplungsabschnittslängsachse verlaufende Auslenkachse verschwenkbar oder einrollbar oder ausrollbar ist.

Vorzugsweise umfasst der Zahnstumpf eins, zwei, drei, vier oder mehr Positionierelemente. Insbesondere drei Positionierelemente ermöglichen auf einfache Weise eine sichere und definierte Positionierung und insbesondere auch Zentrierung des Zahnstumpfs in der Zahnstumpfaufnahme in einer Richtung quer zur Kupplungsabschnittslängsachse.

Günstig ist es, wenn eine Mehrzahl von Positionierelementen vorgesehen ist, insbesondere zwei, drei oder vier, und wenn die Positionierelemente gleichmäßig über einen Umfang des Kupplungsabschnitts verteilt angeordnet oder ausgebildet sind. So können insbesondere durch die Rückstelleinrichtung ausgeübte Kräfte, die auf die Mehrzahl der Positionierelemente in aus der Grundstellung ausgelenkten Haltestellungen wirken, für eine definierte Positionierung des Zahnstumpfs in der Zahnstumpfaufnahme genutzt werden.

Das Einsetzen des Zahnstumpfs in die Zahnstumpfaufnahme des Dentalmodells wird besonders einfach, wenn die Mehrzahl von Positionierelementen bezogen auf die Kupplungsabschnittslängsachse gleichsinnig orientiert am Kupplungsabschnitt angeordnet oder ausgebildet ist.

Günstig ist es, wenn zwei oder mehr Führungselemente am mindestens einen Positionierelement angeordnet oder ausgebildet sind. Diese können beispielsweise in Umfangsrichtung oder parallel zur Kupplungsabschnittslängsachse versetzt zueinander angeordnet sein, um entweder in Umfangsrichtung oder parallel zur Kupplungsabschnittslängsachse den Zahnstumpf beim Einführen in die Zahnstumpfaufnahme des Dentalmodells zu führen.

Vorzugsweise verläuft eine Verbindungslinie der zwei oder mehr Führungselemente parallel zur Kupplungsabschnittslängsachse. So kann eine optimale Führung des Zahnstumpfs beim Einführen in die Zahnstumpfaufnahme des Dentalmodells erreicht werden.

Vorteilhaft ist es, wenn das mindestens eine Führungselement in Form eines Führungsvorsprungs oder in Form einer Führungsnut ausgebildet ist. Derartige Führungselemente lassen sich auf einfache Weise ausbilden und ermöglichen insbesondere eine optimale Führung im Zusammenwirken mit korrespondierenden Führungselementen am Dentalmodell. Insbesondere können am Dentalmodell mindestens ein zur Führungsnut korrespondierender Vorsprung oder mindestens eine zum Führungsvorsprung korrespondierende Nut vorgesehen sein.

Günstig ist es, wenn das mindestens eine Führungselement auf einer von der Kupplungsabschnittslängsachse weg weisenden Außenfläche des mindestens einen Positionierelements angeordnet oder ausgebildet ist. Dies ermöglicht es insbesondere, das mindestens eine Führungselement auch als Abstandselement zu nutzen, um ein in Kontakttreten des mindestens einen Positionierelements mit dem Dentalmodell, insbesondere einem Grundkörper desselben, zu vermeiden. Beispielsweise kann ein Kontakt zwischen dem Zahnstumpf und dem Dentalmodell begrenzt werden auf einen direkten Kontakt zwischen dem mindestens einen Führungselement und dem Dentalmodell im Bereich der Zahnstumpfaufnahme.

Günstigerweise weist das mindestens eine Führungselement eine in distaler Richtung weisende Aufgleitfläche auf. Eine solche Aufgleitfläche ermöglicht es insbesondere, das mindestens eine Positionierelement beim in Kontakt Treten des mindestens einen Führungselements mit der Zahnstumpfaufnahme des Dentalmodells aus der Grundstellung in die ausgelenkte Haltestellung zu zwingen. Die Aufgleitfläche erleichtert diesen Vorgang.

Besonders einfach und kostengünstig ausbilden lässt sich der Zahnstumpf, wenn der Kupplungsabschnitt in Form einer Kupplungshülse ausgebildet ist. So kann der Zahnstumpf insbesondere bei einer Herstellung mittels 3D-Druck schneller ausgebildet werden. Ferner kann beispielsweise bei Herstellung des Zahnstumpfs mittels eines generativen Herstellungsverfahrens kann so ein zu verfestigendes Volumen des Zahnstumpfs minimiert werden. Dies beschleunigt den Herstellungsprozess und kann insbesondere auch dazu beitragen, Herstellungskosten zu optimieren.

Günstig ist es, wenn der Kupplungsabschnitt eine Kupplungsabschnittstabilisierungseinrichtung umfasst. Die Kupplungsabschnittstabilisierungseinrichtung dient insbesondere dem Zweck, den Kupplungsabschnitt mechanisch zu stabilisieren.

Günstigerweise ist die Kupplungsabschnittstabilisierungseinrichtung von der Kupplungshülse umgeben. Die Kupplungshülse dient in diesem Fall insbesondere auch als Schutz für die Kupplungsabschnittstabilisierungseinrichtung.

Auf einfache Weise ausbilden lässt sich der Zahnstumpf, wenn die Kupplungsabschnittstabilisierungseinrichtung mindestens ein Kupplungsabschnittstabilisierungselement umfasst. Dies kann insbesondere einander gegenüberliegende oder benachbarte Abschnitte der Kupplungshülse miteinander verbinden, um ein Verwinden der Kupplungshülse möglichst auszuschließen.

Auf einfache Weise lässt sich die Kupplungsabschnittstabilisierungseinrichtung ausbilden, wenn das mindestens eine Kupplungsabschnittstabilisierungselement in Form eines Stabilisierungsstegs oder eines Stabilisierungswandabschnitts ausgebildet ist. Es können auch zwei, drei oder mehr Kupplungsabschnittstabilisierungselemente vorgesehen sein. Diese können beispielsweise einander kreuzend ausgebildet sein, um die Kupplungshülse im Innern zu stabilisieren.

Eine besonders gute Stabilisierung der Kupplungshülse lässt sich erreichen, wenn eine Mehrzahl von Kupplungsabschnittstabilisierungselementen vorgesehen ist.

Günstig ist es, wenn sich die Mehrzahl der Kupplungsabschnittstabilisierungselemente ausgehend von der Kupplungsabschnittslängsachse bis zur Kupplungshülse erstreckt. Auf diese Weise können insbesondere auch sich durchdringende oder sich kreuzende Kupplungsabschnittstabilisierungselemente ausgebildet werden.

Eine besonders stabile Anordnung des Zahnstumpfs kann insbesondere dadurch erreicht werden, dass die Kupplungsabschnittstabilisierungseinrichtung im Querschnitt bezogen auf die Kupplungsabschnittslängsachse stern- oder kreuzförmig ausgebildet ist.

Günstigerweise ist der Kupplungsabschnitt distalseitig durch einen umlaufenden Rand begrenzt und umfasst ein distalseitig über den Rand vorstehendes Standelement. Diese Ausgestaltung ermöglicht es insbesondere, den Zahnstumpf beispielsweise auf einem Arbeitstisch abzustellen, ohne dass der Zahnstumpf umkippen kann.

Auf einfache Weise lässt sich der Zahnstumpf ausbilden, wenn das Standelement plattenförmig ausgebildet ist.

Günstig ist es, wenn das Standelement bezogen auf die Kupplungsabschnittslängsachse eine Standelementquerschnittsfläche definiert, wenn die Kupplungshülse eine Kupplungshülsenquerschnittsfläche definiert, und wenn die Standelementquerschnittsfläche kleiner als die Kupplungshülsenquerschnittsfläche ist. Ein derart ausgebildeter Zahnstumpf kann auf einfache Weise in eine Zahnstumpfaufnahme des Dentalmodells eingeführt werden, ohne dass das Standelement mit einer inneren Wandfläche der Kupplungshülse in Kontakt treten kann.

Ferner ist es günstig, wenn das Standelement bezogen auf die Kupplungsabschnittslängsachse eine Standelementquerschnittsfläche definiert, wenn die Kupplungshülse eine Kupplungshülsenquerschnittsfläche definiert und wenn die Standelementquerschnittsfläche der Kupplungshülsenquerschnittsfläche geometrisch ähnlich ist. Diese Ausgestaltung hat ebenfalls den Vorteil, dass der Zahnstumpf einfach und sicher in die Zahnstumpfaufnahme eingeführt werden kann. Wenn beispielsweise die Standelementquerschnittsfläche kreisförmig ist, bedeutet geometrisch ähnlich, dass die Kupplungshülsenquerschnittsfläche ebenfalls kreisförmig ist. Dies gilt entsprechend für beliebige geometrische Querschnittsformen.

Ferner kann es günstig sein, wenn der Kupplungsabschnitt eine umlaufende Wand umfasst und wenn das mindestens eine Positionierelement einen Teil der Wand bildet. So lässt sich der Zahnstumpf besonders kompakt ausbilden. Insbesondere lässt sich das mindestens eine Positionierelement als Ausschnitt der Wand ausbilden, beispielsweise durch Ausbilden entsprechender Schlitze in der Wand.

Um eine hinreichende Stabilität für den Zahnstumpf erreichen zu können, ist es günstig, wenn die Wand eine Wanddicke in einem Bereich von etwa 0,5 mm bis etwa 1,5 mm aufweist. Insbesondere kann die Wanddicke etwa 1 mm betragen.

Ferner ist es vorteilhaft, wenn das mindestens eine Positionierelement ein freies Ende aufweist und durch einen Spalt in der Wand ausgebildet ist. Der Spalt kann insbesondere nach Ausbilden der Kupplungshülse in der Wand ausgebildet werden oder bei einem generativen Fertigungsverfahren zur Ausbildung des Zahnstumpfs bereits berücksichtigt werden.

Ein lappenförmiges Positionierelement kann insbesondere auf einfache Weise dann ausgebildet werden, wenn der Spalt U-förmig oder im Wesentlichen U-förmig ausgebildet ist.

Günstig ist es, wenn der Spalt einen parallel oder im Wesentlichen parallel zur Kupplungsabschnittslängsachse verlaufenden Spaltabschnitt umfasst. Auf diese Weise kann ein freies Ende des mindestens einen Positionierelements insbesondere auch parallel zur Kupplungsabschnittslängsachse verlaufen.

Günstig ist es, wenn der Spalt einen in Umfangsrichtung oder im Wesentlichen in Umfangsrichtung bezogen auf die Kupplungsabschnittslängsachse verlaufenden Spaltabschnitt umfasst. Beispielsweise kann so ein dreiseitig durch einen Spalt, insbesondere einen U-förmigen Spalt, in der Wand ausgebildetes Positionierelement definiert werden.

Gemäß einer weiteren bevorzugten Ausführungsform der Erfindung kann vorgesehen sein, dass der Spalt einen in Umfangsrichtung bezogen auf eine senkrecht zur Kupplungsabschnittslängsachse verlaufende Querschnittsebene um einen Neigungswinkel geneigten Spaltabschnitt aufweist. Eine solche Ausgestaltung ermöglicht es insbesondere auf einfache Weise, eine Breite des mindestens einen Positionierelements zu variieren, beispielsweise um eine Elastizität oder Flexibilität eines in der Wand ausgebildeten Positionierelements längs seiner Erstreckung in Umfangsrichtung zu variieren.

Günstig ist es, wenn der Neigungswinkel in einem Bereich von 0° bis etwa 20° liegt. Insbesondere kann der Neigungswinkel etwa 10° betragen. Auf diese Weise lässt sich ein hinreichend stabiles Positionierelement ausbilden.

Vorteilhaft ist es, wenn die Wand ein distales, vom Zahnabschnitt weg weisendes Wandende aufweist und wenn sich das mindestens eine Positionierelement bis zum Wandende erstreckt. Diese Ausgestaltung hat insbesondere den Vorteil, dass das Positionierelement nicht von insbesondere drei Seiten durch einen Schlitz aus der Wand ausgebildet werden muss, sondern beispielsweise nur durch zwei geradlinige Schlitze, welche insbesondere im Wesentlichen parallel zur Kupplungsabschnittslängsachse und quer, insbesondere senkrecht, zu dieser verlaufen.

Eine einfache und stabile Ausgestaltung des Zahnstumpfs lässt sich insbesondere dadurch erreichen, dass das Wandende in Form eines umlaufenden Randes der Wand ausgebildet ist.

Insbesondere kann es vorteilhaft sein, wenn der Rand durch mindestens einen Spaltabschnitt des mindestens einen Spalts unterbrochen ist. So lässt sich insbesondere ein Positionierelement ausbilden, welches sich bis zum Wandende erstreckt.

Gemäß einer weiteren bevorzugten Ausführungsform der Erfindung kann vorgesehen sein, dass sich der Rand in distaler Richtung konisch verjüngt und eine um einen Konuswinkel geneigte Randfläche definiert. Insbesondere kann durch diese Ausgestaltung eine hochpräzise Positionierung des Zahnstumpfs in der Zahnstumpfaufnahme in einer Richtung parallel zur Kupplungsabschnittslängsachse erreicht werden. Insbesondere kann am Dentalmodell ein korrespondierender Konus mit einem korrespondierenden Konuswinkel ausgebildet sein, so dass die geneigte Randfläche des Zahnstumpfs an der korrespondierenden Konusfläche des Dentalmodells anschlagen und so den Zahnstumpf in einer Raumrichtung parallel zur Kupplungsabschnittslängsachse positionieren kann.

Günstigerweise weist der Konuswinkel einen Wert in einem Bereich von 0° bis etwa 75° auf. Insbesondere kann der Konuswinkel etwa 60° betragen. Derartige Konuswinkel sind einfach herzustellen. Ferner haben sie insbesondere auch den Vorteil, dass eine optimale Positionierung des Zahnstumpfs in der Zahnstumpfaufnahme in einer Richtung parallel zur Kupplungsabschnittslängsachse möglich ist.

Um die Herstellung des Zahnstumpfs zu vereinfachen, insbesondere, wenn hierfür eine generatives Fertigungsverfahren eingesetzt wird, ist es günstig, wenn das Standelement vom Wandende beabstandet ist.

Um eine eindeutige Positionierung des Zahnstumpfs in der Zahnstumpfaufnahme zu erreichen, ist es vorteilhaft, wenn der Kupplungsabschnitt eine Grundquerschnittsform bezogen auf die Kupplungsabschnittslängsachse aufweist, welche von einer Kreisform abweicht. So kann insbesondere eine eindeutige Positionierung des Zahnstumpfs in der Zahnstumpfaufnahme in einer Umfangsrichtung bezogen auf die Kupplungsabschnittslängsachse vorgegeben werden.

Einfach und kostengünstig ausbilden lässt sich der Zahnstumpf, wenn die Grundquerschnittsform oval oder vieleckig ist. Insbesondere kann die Grundquerschnittsform drei-, vier- oder fünfeckig sein.

Vorzugsweise ist der Zahnstumpf einstückig ausgebildet. Insbesondere kann er monolithisch ausgebildet sein. Auf diese Weise lässt sich eine Stabilität des Zahnstumpfs verbessern.

Günstig ist es, wenn der Zahnstumpf durch ein generatives Herstellungsverfahren ausgebildet ist. Insbesondere kann er durch 3D-Druck ausgebildet sein. Auf diese Weise lassen sich filigrane Zahnstümpfe mit hoher Präzision ausbilden.

Günstig ist es, wenn der Zahnstumpf aus einem Kunststoffmaterial ausgebildet ist. Auf diese Weise lässt sich ein Zahnstumpf kostengünstig ausbilden. Allerdings hat eine Herstellung des Zahnstumpfs aus einem Kunststoffmaterial, beispielsweise aus einer durch Beaufschlagung mit elektromagnetischer Strahlung aushärtenden Polymerlösung den Nachteil, dass, insbesondere abhängig von Strukturgrößen einzelner Elemente am Zahnstumpf, unausweichlich Fertigungstoleranzen auftreten können. Diese können jedoch mit der am Zahnstumpf vorgesehenen Positioniereinrichtung ausgeglichen werden.

Die eingangs gestellte Aufgabe wird ferner bei einem Dentalmodell der eingangs beschriebenen Art erfindungsgemäß dadurch gelöst, dass die Aufnahmepositioniereinrichtung mindestens ein an der Zahnstumpfaufnahme ausgebildetes Aufnahmepositionierelement umfasst, dass das mindestens eine Aufnahmepositionierelement aus einer Grundstellung entgegen der Wirkung einer Aufnahmerückstelleinrichtung in eine auf die Aufnahmelängsachse oder im Wesentlichen auf die Aufnahmelängsachse hin oder von dieser weg ausgelenkte Haltestellung auslenkbar ist, dass das mindestens eine Aufnahmepositionierelement in der Haltestellung entgegen der Wirkung der Aufnahmerückstelleinrichtung aus der Grundstellung ausgelenkt ist, dass die Aufnahmepositioniereinrichtung mindestens ein Aufnahmeführungselement umfasst und dass das mindestens eine Aufnahmeführungselement am mindestens einen Aufnahmepositionierelement angeordnet oder ausgebildet ist.

Die vorgeschlagene Weiterbildung eines bekannten Dentalmodells ermöglicht auf einfache und sichere Weise, Zahnstümpfe definiert in der Zahnstumpfaufnahme zu positionieren. Insbesondere können hier auch Zahnstümpfe positioniert werden, die selbst keine Positioniereinrichtung umfassen, wie sie eingangs und oben im Detail näher beschrieben wurde. Der Ausgleich von Fertigungstoleranzen am Zahnstumpf und/oder am Dentalmodell wird bei dem wie vorgeschlagen weitergebildeten Dentalmodell durch das mindestens eine Aufnahmepositionierelement ermöglicht. Die Aufnahmerückstelleinrichtung kann insbesondere eine Kraft auf den in die Zahnstumpfaufnahme eingeführten Zahnstumpf ausüben, wenn dieser das mindestens eine Aufnahmepositionierelement aus der Grundstellung in die ausgelenkte Haltestellung ausgelenkt hat. Das Einführen des Zahnstumpfs in die Zahnstumpfaufnahme des Dentalmodells ist verbessert, da die Aufnahmepositioniereinrichtung mindestens ein Aufnahmeführungselement umfasst und da das mindestens eine Aufnahmeführungselement am mindestens einen Aufnahmepositionierelement angeordnet oder ausgebildet ist. Insbesondere kann so erreicht werden, dass der Zahnstumpf nicht direkt mit dem Aufnahmepositionierelement, sondern nur indirekt mit diesem in Kontakt tritt, jedoch direkt mit dem Aufnahmeführungselement zusammenwirken kann.

Vorteilhaft ist es, wenn die Aufnahmerückstelleinrichtung mindestens ein Aufnahmerückstellelement umfasst, entgegen dessen Wirkung das mindestens eine Aufnahmepositionierelement in die Haltestellung auslenkbar ist. Die Aufnahmerückstelleinrichtung kann also insbesondere mehrere Aufnahmerückstellelemente umfassen, beispielsweise zwei, drei, vier oder mehr. Insbesondere ist es mit der Aufnahmerückstelleinrichtung möglich, die Position des Zahnstumpfs in der Zahnstumpfaufnahme zu zentrieren.

Um ein mehrmaliges in Eingriff und außer Eingriff Bringen des Zahnstumpfs und der Zahnstumpfaufnahme zu ermöglichen, ist es günstig, wenn das mindestens eine Aufnahmerückstellelement federelastisch oder im Wesentlichen federelastisch ausgebildet ist. Nach einer Auslenkung aus der Grundstellung in die Haltestellung kann das Aufnahmerückstellelement nach Entfernen des Zahnstumpfs wieder automatisch in die Grundstellung übergehen.

Vorteilhaft ist es, wenn das mindestens eine Aufnahmepositionierelement federnd an der Zahnstumpfaufnahme gehalten oder ausgebildet oder gelagert ist. Dies ermöglicht es insbesondere, dass der Zahnstumpf beim Einführen in die Zahnstumpfaufnahme mit dem mindestens einen Aufnahmepositionierelement wechselwirken kann.

Besonders kompakt ausbilden lässt sich das Dentalmodell, wenn das mindestens eine Aufnahmepositionierelement das mindestens eine Aufnahmerückstellelement umfasst oder bildet. Insbesondere können das mindestens eine Aufnahmepositionierelement und das mindestens eine Aufnahmerückstellelement einstückig, insbesondere monolithisch, ausgebildet sein.

Vorteilhaft ist es, wenn das mindestens eine Aufnahmepositionierelement um eine parallel oder quer, insbesondere senkrecht, zur Aufnahmelängsachse verlaufende Aufnahmeauslenkachse verschwenkbar oder einrollbar oder ausrollbar ist. Je nach Ausrichtung des mindestens einen Aufnahmepositionierelements kann eine besonders gute Zentrierung des Zahnstumpfs in der Zahnstumpfaufnahme mittels des mindestens einen Aufnahmepositionierelements erreicht werden.

Günstigerweise umfasst das Dentalmodell ein, zwei, drei, vier oder mehr Aufnahmepositionierelemente. Insbesondere haben drei Aufnahmepositionierelemente, welche beispielsweise gleichmäßig über einen Umfang bezogen auf die Aufnahmelängsachse angeordnet oder ausgebildet sind, den Vorteil, dass der Zahnstumpf auf einfache Weise in der Zahnstumpfaufnahme zentriert und somit in definierter Weise insbesondere in einer Ebene quer zur Aufnahmelängsachse positioniert werden kann.

Ferner ist es günstig, wenn eine Mehrzahl von Aufnahmepositionierelementen vorgesehen ist, insbesondere zwei, drei oder vier, und wenn die Aufnahmepositionierelemente gleichmäßig über einen Umfang der Zahnstumpfaufnahme verteilt angeordnet oder ausgebildet sind. Insbesondere kann so eine optimale Positionierung, insbesondere eine Zentrierung, des Zahnstumpfs in der Zahnstumpfaufnahme auf einfache Weise erreicht werden.

Das Einführen des Zahnstumpfs in die Zahnstumpfaufnahme des Dentalmodells lässt sich weiter vereinfachen, wenn die Mehrzahl von Aufnahmepositionierelementen bezogen auf die Aufnahmelängsachse gleichsinnig orientiert an der Zahnstumpfaufnahme angeordnet oder ausgebildet sind. So kann insbesondere ein Verhacken beim Einführen des Zahnstumpfs in die Zahnstumpfaufnahme vermieden werden.

Um eine besonders gute Führung des Zahnstumpfs beim Einführen in die Zahnstumpfaufnahme des Dentalmodells zu ermöglichen, ist es vorteilhaft, wenn zwei oder mehr Aufnahmeführungselemente am mindestens einen Aufnahmepositionierelement angeordnet oder ausgebildet sind.

Vorzugsweise verläuft eine Verbindungslinie der zwei oder mehr Aufnahmeführungselemente parallel zur Aufnahmelängsachse. So können die Aufnahmeführungselemente beim Einführen des Zahnstumpfs in die Zahnstumpfaufnahme nacheinander mit dem Zahnstumpf in Kontakt treten und diesen in gewünschter Weise führen.

Günstig ist es, wenn das mindestens eine Aufnahmeführungselement in Form eines Aufnahmeführungsvorsprungs oder in Form einer Aufnahmeführungsnut ausgebildet ist. Derartige Aufnahmeführungselemente lassen sich auf einfache Weise ausbilden. Zudem können sie insbesondere mit korrespondierenden Führungselementen am Zahnstumpf zum Einführen und Positionieren desselben in der Zahnstumpfaufnahme zusammenwirken.

Um auf einfache Weise ein Zusammenwirken des mindestens einen Aufnahmeführungselements mit dem Zahnstumpf zu ermöglichen, ist es günstig, wenn das mindestens eine Aufnahmeführungselement auf einer auf die Aufnahmelängsachse hin weisenden Innenfläche des mindestens einen Aufnahmepositionierelements angeordnet oder ausgebildet ist.

Um das mindestens eine Aufnahmepositionierelement beim Einführen des Zahnstumpfs auf einfache und sichere Weise auslenken zu können, ist es vorteilhaft, wenn das mindestens eine Aufnahmeführungselement eine in proximaler Richtung weisende Aufnahmeaufgleitfläche aufweist. In proximaler Richtung ist hier so zu verstehen, dass die Aufnahmeaufgleitfläche in Richtung auf den Zahnstumpf beim Einführen in die Zahnstumpfaufnahme hin weist.

Günstigerweise ist die Zahnstumpfaufnahme in Form einer Zahnstumpfaufnahmehülse ausgebildet. Eine solche lässt sich auf einfache Weise und mit einem relativ geringen Materialeinsatz ausbilden.

Um eine Verformung der Zahnstumpfaufnahme möglichst zu vermeiden, insbesondere beim Einführen des Zahnstumpfs, ist es vorteilhaft, wenn die Zahnstumpfaufnahme eine Zahnstumpfaufnahmestabilisierungseinrichtung umfasst.

Um einen Zahnstumpf in gewünschter Weise in die Zahnstumpfaufnahme einführen zu können, ist es günstig, wenn die Zahnstumpfaufnahmestabilisierungseinrichtung die Zahnstumpfaufnahmehülse umgibt.

Auf einfache Weise lässt sich das Dentalmodell ausbilden, wenn die Zahnstumpfaufnahmestabilisierungseinrichtung mindestens ein Zahnstumpfaufnahmestabilisierungselement umfasst. Dieses kann insbesondere direkt oder indirekt an der Zahnstumpfaufnahmehülse angreifen, an dieser angeordnet, ausgebildet oder angeformt sein.

Günstig ist es, wenn das mindestens eine Zahnstumpfaufnahmestabilisierungselement in Form eines Aufnahmestabilisierungsstegs oder eines Aufnahmestabilisierungswandabschnitts ausgebildet ist. Derartige Zahnstumpfaufnahmestabilisierungselemente können auf einfache Weise die Zahnstumpfaufnahme stabilisieren, insbesondere wenn diese in Form einer Zahnstumpfaufnahmehülse ausgebildet ist.

Für eine besonders stabile Ausbildung der Zahnstumpfaufnahme ist es günstig, wenn eine Mehrzahl von Zahnstumpfaufnahmestabilisierungselementen vorgesehen ist.

Günstig ist es, wenn sich die Mehrzahl der Zahnstumpfaufnahmestabilisierungselemente auf die Aufnahmelängsachse hin bis zur Zahnstumpfaufnahmehülse erstreckt. Die Mehrzahl der Zahnstumpfaufnahmestabilisierungselemente kann so die Zahnstumpfaufnahmehülse umgebend und insbesondere strahlenförmig von dieser weg weisend angeordnet oder ausgebildet sein.

Besonders kompakt lässt sich das Dentalmodell ausbilden, wenn die Zahnstumpfaufnahme eine umlaufende Aufnahmewand umfasst und wenn das mindestens eine Aufnahmepositionierelement einen Teil der Aufnahmewand bildet. Insbesondere lässt sich so das mindestens eine Aufnahmepositionierelement in die Aufnahmewand integrieren, bildet also einen Teil desselben.

Günstigerweise weist die Aufnahmewand eine Aufnahmewanddicke in einem Bereich von etwa 0,5 mm bis etwa 1,5 mm auf. Insbesondere kann die Aufnahmewanddicke etwa 1 mm betragen. Eine Aufnahmewanddicke im angegebenen Bereich vorzusehen hat insbesondere den Vorteil, dass das mindestens eine Aufnahmepositionierelement in die Aufnahmewand integriert und gleichzeitig auch ein Aufnahmerückstellelement bilden kann.

Vorteilhaft ist es, wenn das mindestens eine Aufnahmepositionierelement ein freies Aufnahmeende aufweist und durch einen Aufnahmespalt in der Aufnahmewand ausgebildet ist. So kann es insbesondere in Form eines streifen- oder flügel- oder klappenförmigen Elements ausgebildet werden. Dazu muss bei der Herstellung des Dentalmodells lediglich der Spalt freigelassen werden. Alternativ kann der Spalt auch maschinell am Dentalmodell zur Ausbildung des mindestens einen Aufnahmepositionierelements ausgebildet werden.

Einfach und kompakt ausbilden lässt sich das Dentalmodell, wenn der Aufnahmespalt U-förmig oder im Wesentlichen U-förmig ausgebildet ist. Beispielsweise können so Aufnahmepositionierelemente ausgebildet werden durch einen Aufnahmespalt, welcher drei geradlinig oder im Wesentlichen geradlinig verlaufende Spaltabschnitte aufweist.

Vorteilhaft ist es, wenn der Aufnahmespalt einen parallel oder im Wesentlichen parallel zur Aufnahmelängsachse verlaufenden Aufnahmespaltabschnitt umfasst. Insbesondere kann dieser an das Aufnahmeende des mindestens einen Aufnahmepositionierelements angrenzen.

Ferner ist es günstig, wenn der Aufnahmespalt einen in Umfangsrichtung oder im Wesentlichen in Umfangsrichtung bezogen auf die Aufnahmelängsachse verlaufenden Aufnahmespaltabschnitt umfasst. So kann insbesondere ein Aufnahmepositionierelement ausgebildet werden, welches um eine parallel zur Aufnahmelängsachse oder im Wesentlichen parallel zu dieser verlaufende Schwenkachse verschwenkbar oder einrollbar ausgebildet ist.

Günstig ist es, wenn der Aufnahmespalt einen in Umfangsrichtung bezogen auf eine senkrecht zur Aufnahmelängsachse verlaufende Aufnahmequerschnittsebene um einen Aufnahmeneigungswinkel geneigten Aufnahmespaltabschnitt aufweist. Ein solcher geneigter Aufnahmespaltabschnitt ermöglicht es insbesondere, eine Breite des Aufnahmepositionierelements längs seiner Erstreckung in Richtung auf das freie Aufnahmeende desselben hin in gewünschter Weise zu variieren, insbesondere zu verringern. Damit lässt sich insbesondere eine Elastizität oder Flexibilität des mindestens einen Aufnahmepositionierelements in gewünschter Weise vorgeben oder einstellen.

Vorzugsweise liegt der Aufnahmeneigungswinkel im Bereich von 0° bis etwa 20°. Insbesondere kann er etwa 10° betragen.

Die Ausbildung des mindestens einen Aufnahmepositionierelements lässt sich auf einfache Weise dadurch vereinfachen, dass die Aufnahmewand ein proximales Aufnahmewandende aufweist und dass sich das mindestens eine Aufnahmepositionierelement bis zum Aufnahmewandende erstreckt. So genügen letztlich zwei geradlinig verlaufende Aufnahmespaltabschnitte, um ein streifen- oder klappen- oder flügelförmiges Aufnahmepositionierelement auszubilden.

Günstigerweise ist das Aufnahmewandende in Form eines umlaufenden Aufnahmerandes der Aufnahmewand ausgebildet. Das Aufnahmewandende begrenzt so die Zahnstumpfaufnahme in proximaler Richtung.

Vorteilhaft ist es, wenn der Aufnahmerand durch mindestens einen Aufnahmespaltabschnitt des mindestens einen Aufnahmespalts unterbrochen ist. So kann eine Positionierung des Zahnstumpfs in der Zahnstumpfaufnahme bis hin zum Aufnahmewandende erreicht werden.

Gemäß einer weiteren bevorzugten Ausführungsform der Erfindung kann vorgesehen sein, dass an der Zahnstumpfaufnahme ein Tiefenanschlag angeordnet oder ausgebildet ist zum Begrenzen einer Einführtiefe des Zahnstumpfes, insbesondere eines Kupplungsabschnitts desselben, in einer Richtung parallel zur Aufnahmelängsachse in die Zahnstumpfaufnahme hinein. Der Tiefenanschlag der Zahnstumpfaufnahme ermöglicht es insbesondere im Zusammenwirken mit dem Zahnstumpf, eine Einführtiefe für diesen in gewünschter Weise vorzugeben.

Um insbesondere Fertigungstoleranzen auch bei der Ausbildung des Zahnstumpfs und der Zahnstumpfaufnahme ausgleichen zu können, ist es günstig, wenn der Tiefenanschlag eine sich in distaler Richtung konisch verjüngende Anschlagfläche umfasst.

Günstig ist es, wenn die Anschlagfläche einen bezogen auf die Aufnahmelängsachse geneigten Aufnahmekonuswinkel aufweist, welcher insbesondere einen Wert in einem Bereich von 0° bis etwa 75° aufweist, welcher weiter insbesondere etwa 60° beträgt.

Vorteilhaft ist es, wenn die Zahnstumpfaufnahme eine Aufnahmegrundquerschnittsform bezogen auf die Aufnahmelängsachse aufweist, welche von einer Kreisform abweicht. Dies ermöglicht es insbesondere, mit einem korrespondierend geformten Zahnstumpf, diesen eindeutig in der Zahnstumpfaufnahme in Umfangsrichtung bezogen auf die Aufnahmelängsachse zu positionieren.

Auf einfache Weise lässt sich das Dentalmodell ausbilden, wenn die Aufnahmegrundquerschnittsform oval oder vieleckig, insbesondere drei-, vier- oder fünfeckig ist. Vorzugsweise ist die Aufnahmegrundquerschnittsform der Grundquerschnittsform des Zahnstumpfs ähnlich. Dies vereinfacht das Positionieren des Zahnstumpfs in der Zahnstumpfaufnahme des Dentalmodells.

Um eine Stabilität des Dentalmodells verbessern zu können, ist es vorteilhaft, wenn der Grundkörper einstückig, insbesondere monolithisch, ausgebildet ist.

Auf einfache Weise lässt sich der Grundkörper durch ein generatives Herstellungsverfahren ausbilden, insbesondere durch 3D-Druck.

Leicht und insbesondere kostengünstig ausbilden lässt sich das Dentalmodell, wenn der Grundkörper aus einem Kunststoffmaterial ausgebildet ist.

Gemäß einer weiteren bevorzugten Ausführungsform der Erfindung kann das Dentalmodell einen mit dem Grundkörper in der Kupplungsstellung gekuppelten Zahnstumpf umfassen, welcher einen Zahnabschnitt in Form eines Zahnes und einen Kupplungsabschnitt umfasst, wobei der Kupplungsabschnitt des Zahnstumpfs mindestens teilweise, insbesondere vollständig, in der mindestens einen Zahnstumpfaufnahme aufgenommen ist. Es können auch zwei, drei oder mehr Zahnstümpfe in der beschriebenen Weise mit dem Grundkörper gekuppelt sein. So kann insbesondere mit dem Dentalmodell ein Teil oder ein gesamter Unter- oder Oberkiefer eines Patienten nachmodelliert werden.

Vorzugsweise umfasst das Dentalmodell mindestens einen in der Zahnstumpfaufnahme mindestens teilweise aufgenommenen Zahnstumpf. Dies ermöglicht es insbesondere, ein Dentalmodell mit einem, zwei, drei oder mehr Zähnen auszubilden.

Vorzugsweise ist der Zahnstumpf in Form eines der oben beschriebenen Zahnstümpfe ausgebildet. Das Dentalmodell weist dann ebenfalls die oben in Verbindung mit bevorzugten Ausführungsformen von Zahnstümpfen beschriebenen Vorteile auf.

Die eingangs gestellte Aufgabe wird ferner bei einem Dentalmodell der eingangs beschriebenen Art erfindungsgemäß dadurch gelöst, dass der Zahnstumpf in Form eines der oben beschriebenen Zahnstümpfe ausgebildet ist.

Ein Dentalmodell in dieser Weise auszubilden, insbesondere mit einem der oben beschriebenen Zahnstümpfe, ermöglicht es insbesondere, eine Positionierung entweder über den und dessen Positioniereinrichtung und/oder über das Dentalmodell und dessen Aufnahmepositioniereinrichtung zu erreichen.

Vorteilhaft ist es, wenn die Zahnstumpfaufnahme in Form einer Ausnehmung mit einer Zahnstumpfaufnahmenquerschnittsfläche ausgebildet ist und wenn die Kupplungshülsenquerschnittsfläche kleiner als die Zahnstumpfaufnahmenquerschnittsfläche ist. Dies ermöglicht auf einfache Weise das Einführen des Zahnstumpfs in die Zahnstumpfaufnahme.

Um insbesondere ein Dentalmodell als Arbeitsmodell einer oberen oder unteren Gebisshälfte eines Patienten ausbilden zu können, ist es günstig, wenn der Grundkörper in Form eines Teils eines Kiefers ausgebildet ist.

Die eingangs gestellte Aufgabe wird ferner bei einem Verfahren der eingangs beschriebenen Art erfindungsgemäß dadurch gelöst, dass der Zahnstumpf in Form eines der oben beschriebenen Zahnstümpfe durch ein generatives Herstellungsverfahren ausgebildet wird. Insbesondere können die Zahnstümpfe so auf einfache Weise aus Kunststoff oder Metall ausgebildet werden.

Ferner ist es vorteilhaft, wenn das Dentalmodell in Form eines der oben beschriebenen Dentalmodelle durch ein generatives Herstellungsverfahren ausgebildet wird. Beispielsweise können hier generative Herstellungsverfahren eingesetzt werden, die die Ausbildung des Dentalmodells, ebenso wie des Zahnstumpfs, auf Basis dreidimensionaler Bilder oder Daten eines Kiefers eines Patienten ermöglichen. So kann insbesondere vollständig auf für Patienten unangenehme Abdrücke verzichtet werden.

Einfach und kostengünstig lassen sich Dentalmodelle und Zahnstümpfe ausbilden, wenn der Zahnstumpf und/oder das Dentalmodell durch 3D-Druck ausgebildet werden. Insbesondere kann der 3D-Druck auf Kunststoff- oder auch Metallbasis ausgeführt werden.

Die nachfolgende Beschreibung bevorzugter Ausführungsformen der Erfindung dient im Zusammenhang mit den Zeichnungen der näheren Erläuterung. Es zeigen:
- Figur 1:: eine beispielhafte perspektivische, teilweise durchbrochene Ansicht eines Ausführungsbeispiels eines Dentalmodells mit eingesetzten Zahnstümpfen;
- Figur 2:: eine perspektivische Ansicht eines Ausführungsbeispiels eines Zahnstumpfs;
- Figur 3:: eine Ansicht in Richtung des Pfeils A in Figur 2;
- Figur 4:: eine perspektivische Ansicht eines weiteren Ausführungsbeispiels eines Zahnstumpfs;
- Figur 5:: eine Ansicht in Richtung des Pfeils B in Figur 4;
- Figur 6:: eine perspektivische Ansicht eines weiteren Ausführungsbeispiels eines Zahnstumpfs;
- Figur 7:: eine Ansicht in Richtung des Pfeils C aus Figur 6;
- Figur 8:: eine Teilansicht eines Ausführungsbeispiels eines Dentalmodells beim Einführen eines Zahnstumpfs in eine Zahnstumpfaufnahme desselben;
- Figur 9:: eine Ansicht ähnlich Figur 8 nach dem Einsetzen des Zahnstumpf in die Zahnstumpfaufnahme;
- Figur 10:: eine Schnittansicht längs Linie 10-10 in Figur 9;
- Figur 11:: eine Schnittansicht längs Linie 11-11 eines weiteren Ausführungsbeispiels eines Zahnstumpfes aus Figur 12;
- Figur 12:: eine Schnittansicht längs Linie 12-12 des weiteren Ausführungsbeispiels eines Zahnstumpfes aus Figur 11;
- Figur 13:: eine Ausschnittansicht eines weiteren Ausführungsbeispiels Dentalmodells mit zwei eingesetzten Zahnstümpfen aus Figur 14 in Richtung des Pfeils D;
- Figur 14:: eine Schnittansicht längs Linie 14-14 in Figur 13;
- Figur 15:: eine Ausschnittansicht eines weiteren Ausführungsbeispiels eines Dentalmodells mit Aufnahmepositionierelementen; und
- Figur 16:: eine Schnittansicht längs Linie 16-16 in Figur 15.

Ein erstes Ausführungsbeispiel eines Dentalmodells 10 umfasst einen Grundkörper 12 mit mehreren Zahnstumpfaufnahmen 14. In diese Zahnstumpfaufnahmen 14 sind Zahnstümpfe 16 eingesetzt.

Das Dentalmodell 10 dient insbesondere Zahntechnikern und Zahnärzten als Arbeit zum Kontrollmodell zur Anfertigung von Zahnersatz.

Das Dentalmodell 10 kann weiterhin auch einen oder mehrere Zähne umfassen, die direkt am Grundkörper angeformt oder einstückig mit diesem ausgebildet sind. Es ist jedoch auch möglich, den Grundkörper 12 ohne derartige zusätzliche Zähne auszubilden, so dass alle Zähne, die vom Dentalmodell 10 umfasst sind, als Zahnstümpfe 16 ausgebildet werden.

Jeder Zahnstumpf 16 umfasst einen Zahnabschnitt 18 in Form eines menschlichen oder tierischen Zahnes sowie einen sich distalseitig an diesen anschließenden Kupplungsabschnitt 20.

Jeder Kupplungsabschnitt 20 definiert eine Kupplungsabschnittslängsachse 22. Der Kupplungsabschnitt 20 ist ausgebildet zum kraft- und/oder formschlüssigen in Eingriff Bringen mit einer Zahnstumpfaufnahme 14 des Dentalmodells 10 in einer Kupplungsstellung.

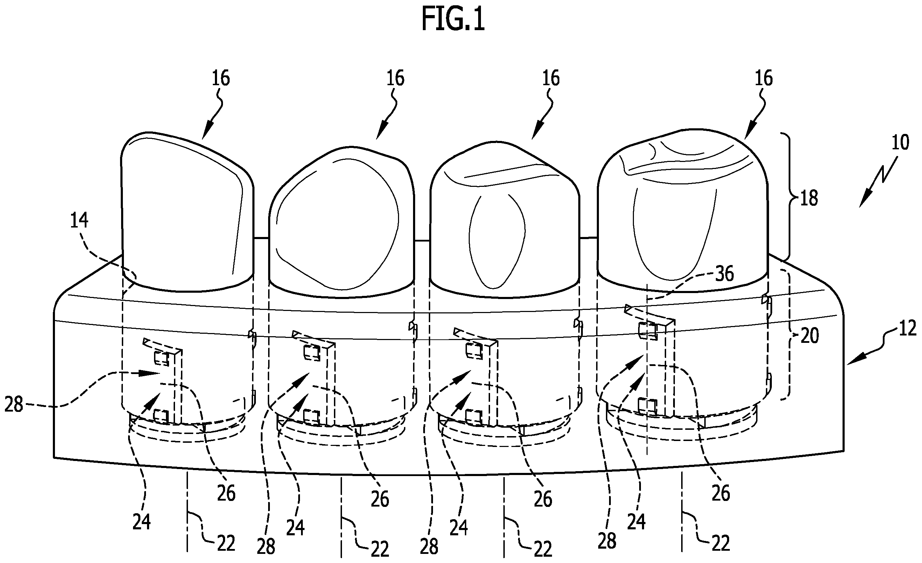

Figur 1 zeigt beispielhaft ein Ausführungsbeispiel eines Dentalmodells 10 mit vier Zahnstumpfaufnahmen 14, die an einem Grundkörper 12 ausgebildet sind. In jede Zahnstumpfaufnahme 14 ist ein Zahnstumpf 16 mit seinem Kupplungsabschnitt 20 kraft- und/oder formschlüssig eingesetzt, so dass der Zahnstumpf 16 die Kupplungsstellung einnimmt.

Jeder Zahnstumpf 16 umfasst eine Positioniereinrichtung 24 zum definierten räumlichen Positionieren des Zahnstumpfs 16 in der Zahnstumpfaufnahme 14 in der Kupplungsstellung.

Die Positioniereinrichtung 24 umfasst ein oder mehrere am Kupplungsabschnitt 20 angeordnete oder ausgebildete Positionierelemente 26. Jedes Positionierelement kann aus einer Grundstellung entgegen der Wirkung einer Rückstelleinrichtung 28 in eine auf die Kupplungsabschnittslängsachse 22 oder im Wesentlichen auf diese hin oder von dieser weg ausgelenkte Haltestellung ausgelenkt werden.

Die Rückstelleinrichtung 28 umfasst ein oder mehrere Rückstellelemente 30. Beispielsweise können drei Rückstellelemente 30 vorgesehen sein. Jedes Positionierelement 26 ist entgegen der Wirkung eines Rückstellelements 30 aus der Grundstellung in die Haltestellung auslenkbar.

Die Rückstellelemente 30 der Zahnstümpfe 16 sind federelastisch oder im Wesentlichen federelastisch ausgebildet.

Die Positionierelemente 26 der Positioniereinrichtungen 24 der Zahnstümpfe 16 sind am Kupplungsabschnitt 20 federnd gehalten oder federnd ausgebildet oder federnd gelagert.

Bei den in Figuren dargestellten Zahnstümpfen 16 sind die Positioniereinrichtungen 26 einstückig mit dem Kupplungsabschnitt 20 ausgebildet. Insbesondere können sie monolithisch mit dem Kupplungsabschnitt 20 ausgebildet sein.

Bei einem Ausführungsbeispiel kann insbesondere ein Positionierelement 26 ein oder mehrere Rückstellelemente 30 umfassen oder ausbilden.

Die Positionierelemente 20 sind insbesondere um eine parallel zur Kupplungsabschnittslängsachse 22 verlaufende Auslenkachse 32 verschwenkbar beziehungsweise einrollbar oder ausrollbar.

Jeder Zahnstumpf 16 kann ein, zwei, drei, vier oder mehr Positionierelemente umfassen. Die in den Figuren dargestellten Zahnstümpfe 16 zeigen beispielhaft drei Positionierelemente 26.

Ferner kann bei einem Ausführungsbeispiel eines Zahnstumpfs 16, welcher zwei oder mehr Positionierelemente 26 umfasst, vorgesehen sein, dass die Positionierelemente 26 gleichmäßig über einen Umfang des Kupplungsabschnitts 20 bezogen auf die Kupplungsabschnittslängsachse 22 verteilt angeordnet oder ausgebildet sind.

Ferner sind die Positionierelemente 26 bei einem Ausführungsbeispiel des Zahnstumpfs 16 bezogen auf die Kupplungsabschnittslängsachse 22 gleichsinnig orientiert am Kupplungsabschnitt 20 angeordnet oder ausgebildet.

Die Positioniereinrichtung 24 kann bei einem Ausführungsbeispiel des Zahnstumpfs 16 ein oder mehrere Führungselemente 34 umfassen, die am Positionierelement 26 angeordnet oder ausgebildet sind.

Bei den in den Figuren beispielhaft dargestellten Zahnstümpfen 16 sind an jedem Positionierelement 26 zwei Führungselemente 34 angeordnet oder ausgebildet. Eine Verbindungslinie 36 der zwei oder mehr Führungselemente 34 verläuft parallel zur Kupplungsabschnittslängsachse 22.

Bei einem Ausführungsbeispiel eines Zahnstumpfs 16 können ein oder mehrere Führungselemente 34 in Form eines Führungsvorsprungs 38 ausgebildet sein. Alternativ kann jedes Führungselement 34 auch in Form einer Führungsnut ausgebildet sein. Die Führungsnut verläuft vorzugsweise parallel zur Kupplungsabschnittlängsachse 22.

Bei einem Ausführungsbeispiel des Zahnstumpfs 16 sind ein oder mehrere Führungselemente 34 auf einer von der Kupplungsabschnittslängsachse 22 weg weisenden Außenfläche 40 des Positionierelements 26 angeordnet.

Jedes Führungselement 34 kann insbesondere einstückig, insbesondere auch monolithisch, mit dem Positionierelement 26 ausgebildet sein.

Der Führungsvorsprung 38 weist eine Breite 42 in Umfangsrichtung bezogen auf die Kupplungsabschnittslängsachse 22 auf, die kleiner ist als eine Länge 44 parallel zur Kupplungsabschnittslängsachse 22.

In distaler Richtung weisend weist das Führungselement 24 eine Aufgleitfläche 46 auf.

Der Kupplungsabschnitt 20 des Zahnstumpfs 16 ist bei einem Ausführungsbeispiel in Form einer Kupplungshülse 48 ausgebildet. Diese definiert eine umlaufende Wand 50.

Bei einem Ausführungsbeispiel bildet das Positionierelement 26 einen Teil der Wand 50. Eine Wanddicke 52 der Wand 50 liegt in einem Bereich von etwa 0,5 mm bis etwa 1,5 mm. Die Wanddicke kann insbesondere etwa 1 mm betragen.

Zur Stabilisierung des Kupplungsabschnitts 20 dient eine Kupplungsabschnittstabilisierungseinrichtung 54, die von der Kupplungshülse 48 umgeben ist.

Bei einem Ausführungsbeispiel umfasst die Kupplungsabschnittsstabilisierungseinrichtung 54 ein oder mehrere Kupplungsabschnittstabilisierungselemente 56.

Bei einem Ausführungsbeispiel sind die Kupplungsabschnittstabilisierungselemente 56 in Form von Stabilisierungsstegen 58 oder Stabilisierungswandabschnitten 60 ausgebildet. Insbesondere können zwei, drei, vier oder mehr Kupplungsabschnittstabilisierungselemente 46 zur Ausbildung der Kupplungsabschnittstabilisierungseinrichtung 54 vorgesehen sein.

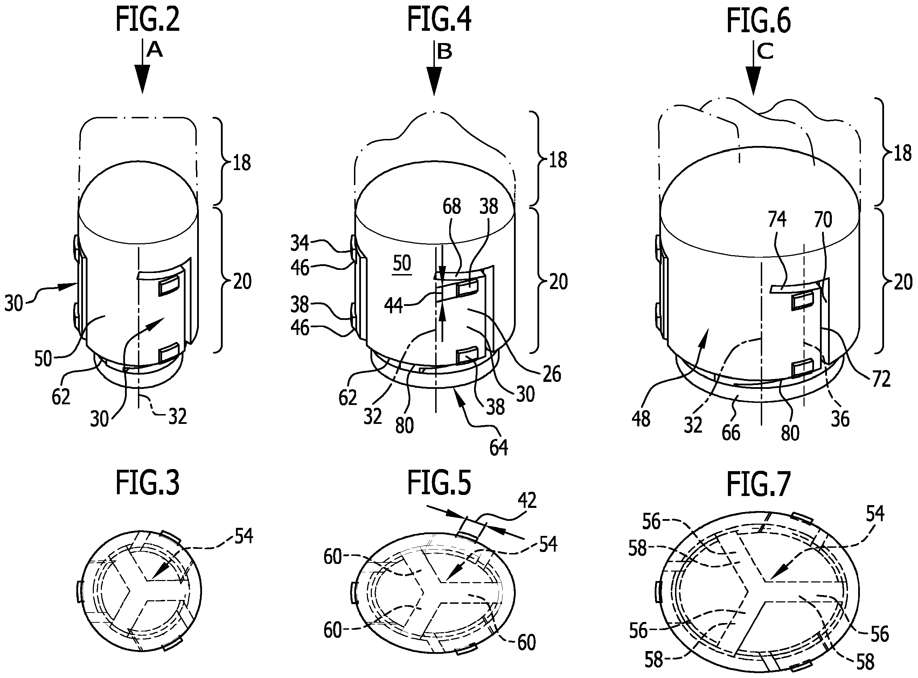

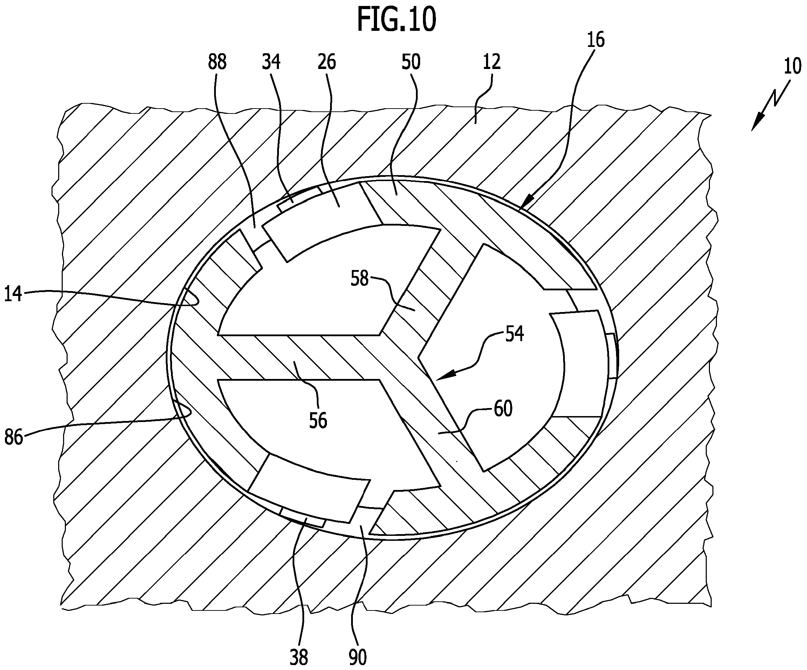

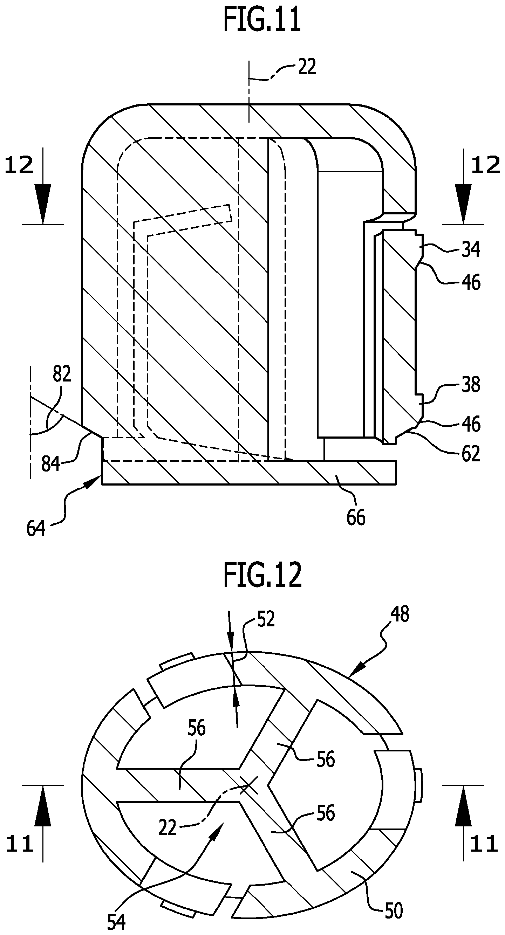

Bei einem Ausführungsbeispiel erstrecken sich die zwei oder mehr Kupplungsabschnittstabilisierungselemente 56 ausgehend von der Kupplungsabschnittlängsachse 22 bis zur Kupplungshülse 48 hin. Dies ist beispielhaft in den Figuren 3, 5, 7, 10 und 12 dargestellt.

Bei einem Ausführungsbeispiel ist die Kupplungsabschnittstabilisierungseinrichtung 54 im Querschnitt bezogen auf die Kupplungsabschnittlängsachse 22 stern- oder kreuzförmig ausgebildet. Dies ist beispielhaft in den Figuren 3, 5, 7, 10 und 12 dargestellt.

Bei einem Ausführungsbeispiel ist der Kupplungsabschnitt 20 distalseitig durch einen umlaufenden Rand 62 begrenzt.

Bei einem weiteren Ausführungsbeispiel umfasst der Kupplungsabschnitt 20 ein distalseitig über den Rand 62 vorstehendes Standelement 64.

Das Standelement 64 ist vorzugsweise plattenförmig ausgebildet und umfasst eine Standplatte 66.

Das Standelement 64 definiert bezogen auf die Kupplungsabschnittlängsachse 24 eine Standelementquerschnittsfläche. Die Kupplungshülse 48 definiert bezogen auf die Kupplungsabschnittslängsachse 22 eine Kupplungshülsenquerschnittsfläche. Bei einem Ausführungsbeispiel ist die Standelementquerschnittsfläche kleiner als die Kupplungshülsenquerschnittsfläche.

Ferner ist bei einem Ausführungsbeispiel die Standelementquerschnittsfläche der Kupplungshülsenquerschnittsfläche geometrisch ähnlich. Die Kupplungshülsenquerschnittsfläche kann grundsätzlich beliebig geformt sein. Bei einem Ausführungsbeispiel weist der Kupplungsabschnitt 20 eine Grundquerschnittsform bezogen auf die Kupplungsabschnittslängsachse auf, welche kreisförmig ist.

Ferner kann bei einem Ausführungsbeispiel die Grundquerschnittsform des Kupplungsabschnitts 20 von einer Kreisform abweichen. Eine kreisförmige Grundquerschnittsform ist beispielhaft in Figur 3 dargestellt. Ovale Grundquerschnittsformen sind beispielhaft in den Figuren 5, 7, 10 und 12 dargestellt.

Bei einem Ausführungsbeispiel eines Zahnstumpfs 16 ist die Grundquerschnittsform vieleckig, insbesondere drei-, vier- oder fünfeckig.

Bei einem Ausführungsbeispiel ist das Positionierelement 26 als Teil der Wand 50 ausgebildet. Zu diesem Zweck ist ein Spalt 68 in der Wand 50 ausgebildet.

Der Spalt 68 ist bei einem Ausführungsbeispiel U-förmig oder im Wesentlichen U-förmig ausgebildet.

Bei einem Ausführungsbeispiel umfasst der Spalt 68 einen parallel zur Kupplungsabschnittslängsachse 22 verlaufenden Spaltabschnitt 70, welcher an ein freies Ende 72 des Positionierelements 26 angrenzt.

Ein weiterer Spaltabschnitt 74 des Spalts 68 verläuft bezogen auf die Kupplungslängsachse 22 in Umfangsrichtung oder im Wesentlichen in Umfangsrichtung.

Bei einem Ausführungsbeispiel verläuft der Spaltabschnitt 74 bezogen auf eine senkrecht zur Kupplungsabschnittlängsachse 22 verlaufende Querschnittsebene 76 um einen Neigungswinkel 78 geneigt.

Der Neigungswinkel 78 liegt bei einem Ausführungsbeispiel in einem Bereich von 0° bis etwa 20°. Insbesondere kann der Neigungswinkel etwa 10° betragen.

Bei einem Ausführungsbeispiel erstreckt sich das Positionierelement 26 bis zu einem durch den Rand 62 definierten Wandende 80 der Wand 50. In diesem Fall ist der Rand 62 durch einen oder mehrere Spaltabschnitte 70 des Spalts 68 unterbrochen.

Der Rand 62 verjüngt sich bei einem Ausführungsbeispiel in distaler Richtung weisend konisch und definiert eine um einen Konuswinkel 82 bezogen auf die Kupplungsabschnittslängsachse 22 geneigte Randfläche 84.

Bei einem Ausführungsbeispiel weist der Konuswinkel 82 einen Wert in einem Bereich von 0° bis etwa 75° auf. Insbesondere kann er etwa 60° betragen.

Das Standelement 64 ist bei einem Ausführungsbeispiel vom Wandende 80 beabstandet.

Der Zahnstumpf 16 ist bei einem Ausführungsbeispiel einstückig ausgebildet. Insbesondere kann er monolithisch ausgebildet sein.

Bei einem Ausführungsbeispiel ist der Zahnstumpf 16 durch ein generatives Herstellungsverfahren ausgebildet. Insbesondere ist er durch 3D-Druck ausgebildet.

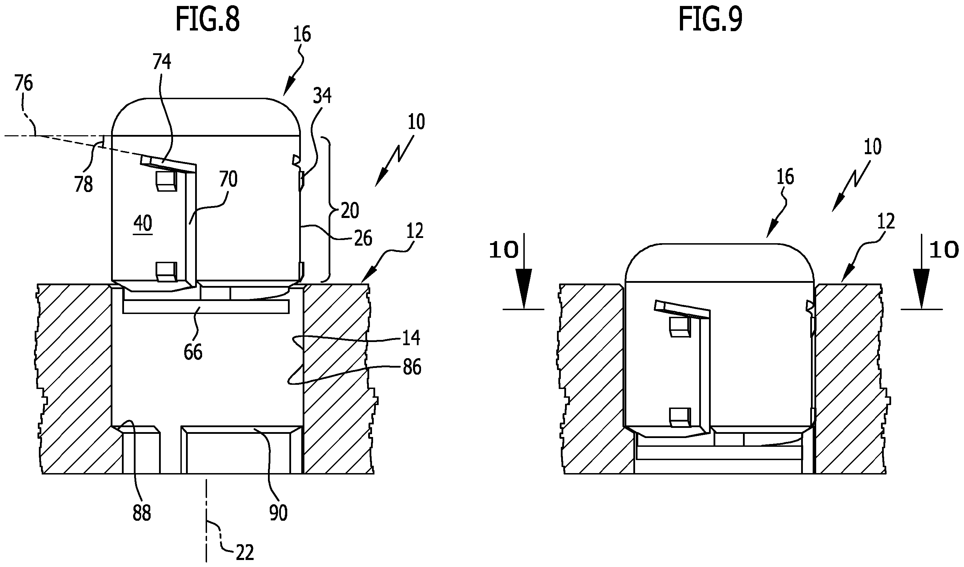

Die Funktionsweise des Zahnstumpfs 16 und des Dentalmodells 10 wird nachfolgend insbesondere in Verbindung mit den Figuren 8 und 9 näher erläutert.

Zum in Eingriff Bringen des Zahnstumpfs 16 mit dem Grundkörper 12 des Dentalmodells 10 wird der Zahnstumpf 16 mit seinem distalen Ende, also mit der Standplatte 66 voraus, in eine Zahnstumpfaufnahme 14 des Grundkörpers 12 eingeführt. Eine durch die Zahnstumpfaufnahme 14 definierte freie Querschnittsfläche ist so bemessen, dass der Zahnstumpf 16 mit dem Kupplungsabschnitt 20 vollständig in der Zahnstumpfaufnahme 14 aufgenommen werden kann.

Für eine definierte Positionierung des Zahnstumpfs 16 in der Zahnstumpfaufnahme 14 dient die Positioniereinrichtung 24. Die Positionierelemente 26 tragen die Führungselemente 34, die von der Außenfläche 40 abstehen, und zwar so weit, dass sie beim Einführen des Kupplungsabschnitts 20 mit einer Innenfläche 86 der Zahnstumpfaufnahme 14 in Kontakt treten können. Das Einführen Zahnstumpfs 16 in die Zahnstumpfaufnahme 14 hinein wird erleichtert durch die Aufgleitflächen 46.

Zum Ausgleich von Fertigungstoleranzen ist eine freie Querschnittsfläche des Kupplungsabschnitts 20, der durch die Führungsvorsprünge 38 definiert wird, etwas größer als eine freie Querschnittsfläche, die die Zahnstumpfaufnahme 14 definiert. Durch das Aufgleiten der Führungsvorsprünge 38 an der Innenfläche 86 wirkt eine in Richtung auf die Kupplungsabschnittslängsachse 22 gerichtete Rückstellkraft auf die Führungselemente 34, die bei einem Ausführungsbeispiel einstückig mit dem Positionierelement 26 ausgebildet sind.

Die Positionierelemente 26 werden beim Einführen des Zahnstumpfs 16 in die Zahnstumpfaufnahme 14 hinein entgegen der Wirkung der Rückstellelemente 30 in Richtung auf die Kupplungsabschnittslängsachse 22 hin bewegt, mithin also aus einer Grundstellung, wie sie beispielhaft in Figur 8 dargestellt ist, in die Haltestellung ausgelenkt, wie sie beispielhaft in Figur 9 dargestellt ist.

Aufgrund der Wirkung der Rückstellelemente 30 werden die Führungselemente 34 unter Vorspannung gegen die Innenfläche 86 gehalten.

Sind beispielsweise drei Positionierelemente mit jeweils zwei Führungselementen 34 am Zahnstumpf 16 vorgesehen, zentriert sich der Zahnstumpf 16 in einer Ebene senkrecht zur Kupplungsabschnittslängsachse 22 in der Zahnstumpfaufnahme 14 automatisch.

Um zudem eine eindeutige Positionierung des Zahnstumpfs 16 in der Zahnstumpfaufnahme 14 zu erreichen, ist eine Querschnittsform des Kupplungsabschnitts 20 vorzugsweise von einer Kreisform abweichend gewählt.

Die Zahnstumpfaufnahme 14 verjüngt sich im Bereich ihres distalen Endes konisch und definiert einen Tiefenanschlag 88 mit einer sich in distaler Richtung konisch verjüngenden Anschlagfläche 90.

Der Tiefenanschlag 88 wirkt mit dem Rand 62 zusammen zum Begrenzen einer Einführtiefe des Zahnstumpfes 16, nämlich insbesondere des Kupplungsabschnitts 20, in einer Richtung parallel zur Kupplungsabschnittslängsachse 22 in der Zahnstumpfaufnahme 14.

In der beschriebenen Weise lässt sich jeder Zahnstumpf 16 in einer für diesen vorgesehenen Zahnstumpfaufnahme 14 hochpräzise positionieren. Etwaige Fertigungstoleranzen bei der Herstellung sowohl des Grundkörpers 12 als auch der Zahnstümpfe 16 des Dentalmodells 10 können durch die Positioniereinrichtung in allen Raumrichtungen ausgeglichen werden.

Bei einem Ausführungsbeispiel des Dentalmodells 10 umfasst dieses einen Grundkörper 12 mit mindestens einer Zahnstumpfaufnahme 14.

Die Zahnstumpfaufnahme 14 ist bei einem Ausführungsbeispiel in Form einer Zahnstumpfaufnahmehülse 92 ausgebildet.

Zur Stabilisierung der Zahnstumpfaufnahme 14, insbesondere der Zahnstumpfaufnahmehülse 92, umfasst ein Ausführungsbeispiel des Dentalmodells eine Zahnstumpfaufnahmestabilisierungseinrichtung 94. Diese umgibt die Zahnstumpfaufnahmehülse 92.

Die Zahnstumpfaufnahmestabilisierungseinrichtung 94 umfasst bei einem Ausführungsbeispiel ein oder mehrere Zahnstumpfaufnahmestabilisierungselemente 96, die in Form eines Aufnahmestabilisierungsstegs 98 oder in Form eines Aufnahmestabilisierungswandabschnitts 100 ausgebildet sind.

Die Zahnstumpfaufnahmestabilisierungseinrichtung 94 kann bei einem Ausführungsbeispiel eine Mehrzahl von Zahnstumpfaufnahmestabilisierungselementen 96 umfassen, insbesondere zwei, drei, vier oder mehr Zahnstumpfaufnahmestabilisierungselemente 96.

Bei einem Ausführungsbeispiel des Dentalmodells 10 erstreckt sich die Mehrzahl der Zahnstumpfaufnahmestabilisierungselemente 96 auf eine Aufnahmelängsachse 102 der Zahnstumpfaufnahme 14 hin, und zwar bis zur Zahnstumpfaufnahmehülse 92.

Die Zahnstumpfaufnahme 14 umfasst bei einem Ausführungsbeispiel eine umlaufende Aufnahmewand 104, welche die Zahnstumpfaufnahmehülse 92 bildet oder von dieser umfasst ist.

Die Aufnahmewand 104 weist bei einem Ausführungsbeispiel eines Dentalmodells 10 eine Aufnahmewanddicke 106 in einem Bereich von etwa 0,5 mm bis etwa 1,5 mm auf. Insbesondere beträgt die Aufnahmewanddicke 106 etwa 1 mm.

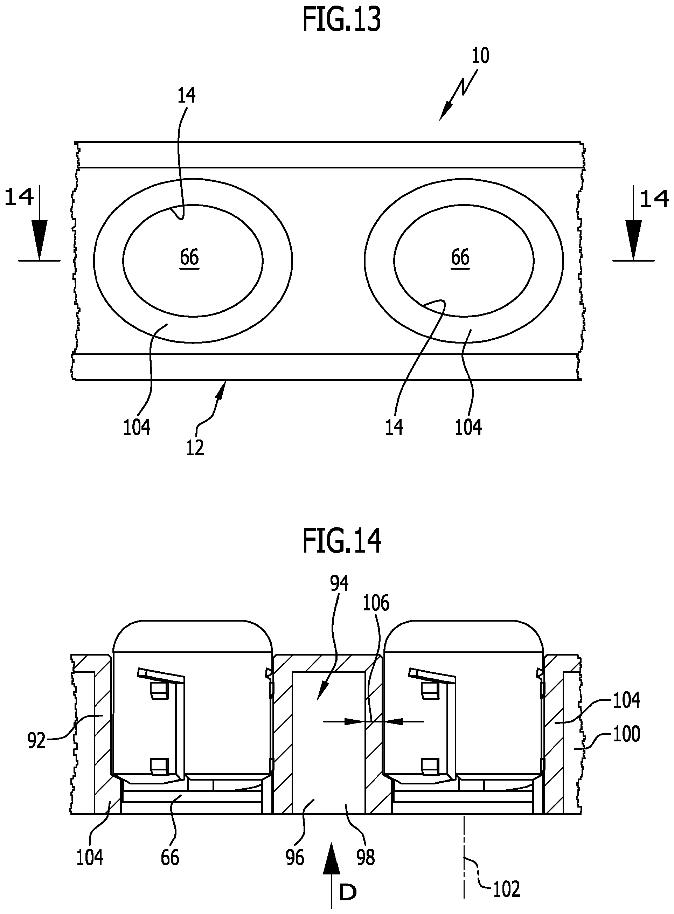

Ein Dentalmodell 10, welches keine Aufnahmepositioniereinrichtung umfasst, ist beispielhaft in den Figuren 1, 8, 9, 10, 13 und 14 schematisch dargestellt.

Ein Dentalmodell 10 ohne Aufnahmepositioniereinrichtung kann insbesondere im Zusammenwirken mit den oben beschriebenen Ausführungsbeispielen von Zahnstümpfen 16 genutzt werden. Die gewünschte Positionierung in allen drei Raumrichtungen wird hier insbesondere durch die Positioniereinrichtung 24 des Zahnstumpfs 16 erreicht.

Werden Zahnstümpfe mit einem Kupplungsabschnitt 20 ohne Positioniereinrichtung genutzt, ist es vorteilhaft, wenn zur räumlichen Positionierung des Zahnstumpfs 16 ein Dentalmodell 10 mit einer Aufnahmepositioniereinrichtung 108 genutzt wird.

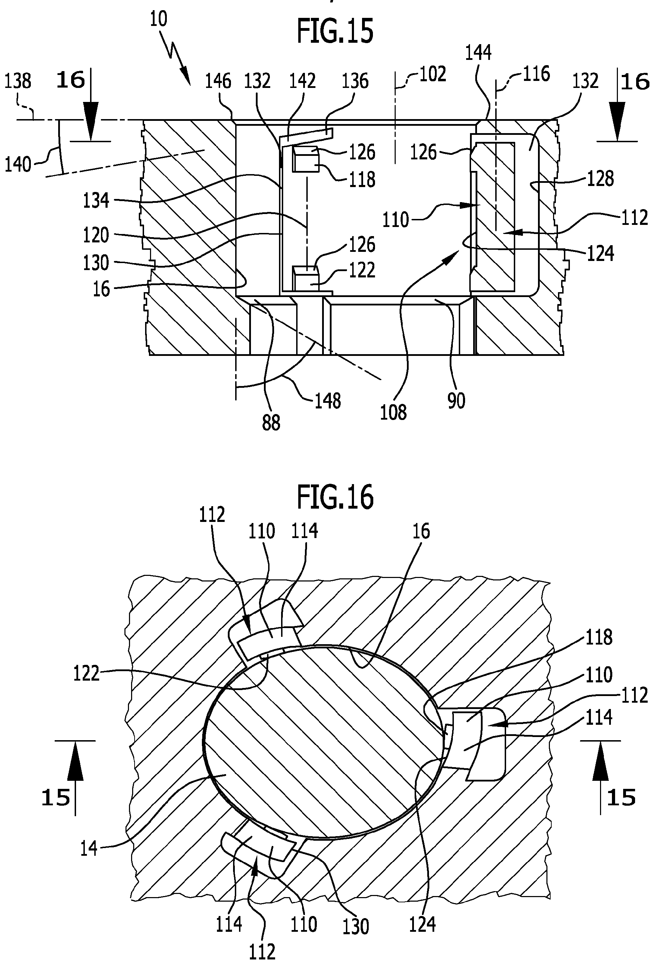

Ein Ausführungsbeispiel eines Dentalmodells 10 mit einer Aufnahmepositioniereinrichtung 108 ist schematisch in den Figuren 15 und 16 dargestellt.

Bei einem Ausführungsbeispiel des Dentalmodells 10 mit einer Aufnahmepositioniereinrichtung 108 umfasst diese ein oder mehrere an der Zahnstumpfaufnahme 14 ausgebildete Aufnahmepositionierelemente 110. Jedes Aufnahmepositionierelement 110 ist aus einer Grundstellung entgegen der Wirkung einer Aufnahmerückstelleinrichtung 112 in eine auf die Aufnahmelängsachse 102 oder im Wesentlichen auf diese hin oder von dieser weg ausgelenkte Haltestellung auslenkbar.

Bei einem Ausführungsbeispiel des Dentalmodells 10 kann die Aufnahmerückstelleinrichtung 112 ein oder mehrere Aufnahmerückstellelemente 114 umfassen, entgegen deren Wirkung ein oder mehrere Aufnahmepositionierelemente 110 aus einer Grundstellung in die Haltestellung auslenkbar sind.

Bei einem Ausführungsbeispiel ist das eine oder sind die mehreren Aufnahmerückstellelemente 114 federelastisch oder im Wesentlichen federelastisch ausgebildet.

Jedes Aufnahmepositionierelement 110 ist federnd an der Zahnstumpfaufnahme 14 gehalten oder ausgebildet oder gelagert.

Bei einem Ausführungsbeispiel des Dentalmodells 10 umfasst das Aufnahmepositionierelement 110 ein oder mehrere Aufnahmerückstellelemente 114. Insbesondere können diese einstückig, beispielsweise monolithisch, ausgebildet sein.

Das Aufnahmepositionierelement 110 ist bei einem Ausführungsbeispiel eines Dentalmodells 10 um eine parallel oder quer, insbesondere senkrecht, zur Aufnahmelängsachse 102 verlaufende Aufnahmeauslenkachse 116 verschwenkbar oder einrollbar oder ausrollbar. Das Aufnahmepositionierelement 110 kann insbesondere flügel- oder klappenförmig ausgebildet sein und in eine Richtung quer, insbesondere in Umfangsrichtung bezogen auf die Aufnahmelängsachse 102 weisend, orientiert sein.

Das Dentalmodell 10 kann insbesondere ein, zwei, drei, vier oder mehr Aufnahmepositionierelemente 110 umfassen.

Bei einem Ausführungsbeispiel eines Dentalmodells 10, wie es schematisch in den Figuren 15 und 16 dargestellt ist, sind insgesamt drei Aufnahmepositionierelemente 110 vorgesehen.

Insbesondere umfasst das Dentalmodell 10 eine Mehrzahl von Aufnahmepositionierelementen 110, beispielsweise zwei, drei oder vier.

Die Aufnahmepositionierelemente 110 sind bei einem Ausführungsbeispiel gleichmäßig über einen Umfang der Zahnstumpfaufnahme 14 verteilt angeordnet oder ausgebildet. Die Mehrzahl von Aufnahmepositionierelementen 110 kann insbesondere bei einem Ausführungsbeispiel bezogen auf die Aufnahmelängsachse 102 gleichsinnig orientiert an der Zahnstumpfaufnahme 14 angeordnet oder ausgebildet sein. Beispielsweise können die Aufnahmepositionierelemente 110 alle gleichsinnig in Form von in Umfangsrichtung weisenden Flügeln ausgebildet sein.

Bei einem Ausführungsbeispiel umfasst die Aufnahmepositioniereinrichtung 108 ein Aufnahmeführungselement 118, welches am Aufnahmepositionierelement 110 angeordnet oder ausgebildet ist.

Bei einem Ausführungsbeispiel eines Dentalmodells 10 können zwei oder mehr Aufnahmeführungselemente 118 an einem Aufnahmepositionierelement 110 angeordnet oder ausgebildet sein.

Eine Verbindungslinie 120 von zwei oder mehr Aufnahmeführungselementen 118 verläuft bei einem Ausführungsbeispiel parallel zur Aufnahmelängsachse 102.

Das eine oder die mehreren Aufnahmeführungselemente 118 sind bei einem Ausführungsbeispiel in Form eines Aufnahmeführungsvorsprungs 122 oder in Form einer Aufnahmeführungsnut ausgebildet.

Das Aufnahmeführungselement 118 ist bei einem Ausführungsbeispiel auf die Aufnahmelängsachse hin weisend auf einer Innenfläche 124 des Aufnahmepositionierelements 110 angeordnet oder ausgebildet.

Um das Einführen eines Zahnstumpfs 16 in die Zahnstumpfaufnahme 14 zu erleichtern, weist das Aufnahmeführungselement 118 bei einem Ausführungsbeispiel eine in proximaler Richtung weisende Aufnahmeaufgleitfläche 126 auf.

Bei einem Ausführungsbeispiel eines Dentalmodells 10 bildet das Aufnahmepositionierelement 110 einen Teil der Aufnahmewand 104. Insbesondere kann das Aufnahmepositionierelement in einer Ausnehmung 128 der Aufnahmewand 104 angeordnet sein oder sich in diese hinein erstrecken.

Das Aufnahmepositionierelement 110 weist bei einem Ausführungsbeispiel ein freies Aufnahmeende 130 auf und ist durch einen Aufnahmespalt 132 in der Aufnahmewand 104 ausgebildet.

Der Aufnahmespalt 132 ist bei einem Ausführungsbeispiel U-förmig oder im Wesentlichen U-förmig ausgebildet.

Der Aufnahmespalt 132 umfasst bei einem Ausführungsbeispiel einen parallel oder im Wesentlichen parallel zur Aufnahmelängsachse 102 verlaufenden Aufnahmespaltabschnitt 134. Ferner kann der Aufnahmespalt 132 einen in Umfangsrichtung oder im Wesentlichen in Umfangsrichtung bezogen auf die Aufnahmelängsachse 102 verlaufenden Aufnahmespaltabschnitt 136 umfassen.

Bei einem Ausführungsbeispiel eines Dentalmodells 10 weist der Aufnahmespalt 132 einen in Umfangsrichtung bezogen auf eine senkrecht zur Aufnahmelängsachse 102 verlaufende Aufnahmequerschnittsebene 138 um einen Aufnahmeneigungswinkel 140 geneigten Aufnahmespaltabschnitt 142 auf.

Der Aufnahmeneigungswinkel 140 liegt vorzugsweise in einem Bereich von 0° bis etwa 20°. Insbesondere kann er etwa 10° betragen.

Die Aufnahmewand 104 weist bei einem Ausführungsbeispiel ein proximales Aufnahmewandende 144 auf. Das Aufnahmepositionierelement 110 kann sich insbesondere bis zum Aufnahmewandende 144 erstrecken.

Das Aufnahmewandende 144 kann bei einem Ausführungsbeispiel eines Dentalmodells 10 in Form eines umlaufenden Aufnahmerands 146 der Aufnahmewand 104 ausgebildet sein. Dabei kann der Aufnahmerand 146 durch mindestens einen Aufnahmespaltabschnitt des mindestens einen Aufnahmespalts 132 unterbrochen sein.

Ferner ist die Anschlagfläche 90 des Tiefenanschlags 88 bei einem Ausführungsbeispiel des Dentalmodells 10 bezogen auf die Aufnahmelängsachse 102 um einen Aufnahmekonuswinkel 148 geneigt. Der Aufnahmekonuswinkel weist bei bevorzugten Ausführungsbeispielen einen Wert in einem Bereich von 0° bis etwa 75° auf. Insbesondere kann er 60° betragen.

Um eine in Umfangsrichtung eindeutige Positionierung des Zahnstumpfs 16 in der Zahnstumpfaufnahme 14 zu ermöglichen, weist die Zahnstumpfaufnahme 14 eine Aufnahmegrundquerschnittsform bezogen auf die Aufnahmelängsachse 102 auf, welche von einer Kreisform abweicht. Die Aufnahmegrundquerschnittsform ist vorzugsweise oval, wie beispielhaft in Figur 16 dargestellt, oder vieleckig, insbesondere drei-, vier- oder fünfeckig.

Der Grundkörper 12 ist bei einem Ausführungsbeispiel eines Dentalmodells 10 einstückig, insbesondere monolithisch, ausgebildet.

Bei einem Ausführungsbeispiel ist der Grundkörper 12 durch ein generatives Herstellungsverfahren ausgebildet, beispielsweise durch 3D-Druck aus einem Kunststoffmaterial.

Das Dentalmodell 10 kann gemäß einem Ausführungsbeispiel eine Aufnahmepositioniereinrichtung 108 an einer oder allen Zahnstumpfaufnahmen 14 aufweisen. In diese Zahnstumpfaufnahmen 14 können insbesondere Zahnstümpfe 16 mit oder ohne Positioniereinrichtung 24 eingesetzt werden.

Die beschriebenen Ausführungsbeispiele von Dentalmodellen 10, insbesondere die beschriebenen Ausführungsbeispiele von Grundkörpern 12 und Zahnstümpfen 16, ermöglichen die Ausbildung von Arbeits- und Kontrollmodellen zur Anfertigung von Zahnersatz, wobei einzelne modellierte Zähne durch Austausch von Zahnstümpfen 16 bei Bedarf einzeln ausgetauscht und präpariert werden können.

Alle beschriebenen Komponenten können insbesondere durch generative Fertigungsverfahren auf Basis von dreidimensionalen Konturdaten hergestellt werden, welche Konturdaten mittels bildgebender Verfahren, beispielsweise mittels Ultraschall oder Röntgenstrahlen aufgenommener Bilder eines menschlichen oder tierischen Gebisses gefertigt werden können.

### Bezugszeichenliste

- 10: Dentalmodell
- 12: Grundkörper
- 14: Zahnstumpfaufnahme
- 16: Zahnstumpf
- 18: Zahnabschnitt
- 20: Kupplungsabschnitt
- 22: Kupplungsabschnittslängsachse
- 24: Positioniereinrichtung
- 26: Positionierelement
- 28: Rückstelleinrichtung
- 30: Rückstellelement
- 32: Auslenkachse
- 34: Führungselement
- 36: Verbindungslinie
- 38: Führungsvorsprung
- 40: Außenfläche
- 42: Breite
- 44: Länge
- 46: Aufgleitfläche
- 48: Kupplungshülse
- 50: Wand
- 52: Wanddicke
- 54: Kupplungsabschnittstabilisierungseinrichtung
- 56: Kupplungsabschnittstabilisierungselement
- 58: Stabilisierungssteg
- 60: Stabilisierungswandabschnitt
- 62: Rand
- 64: Standelement
- 66: Standplatte
- 68: Spalt
- 70: Spaltabschnitt
- 72: freies Ende
- 74: Spaltabschnitt
- 76: Querschnittsebene
- 78: Neigungswinkel
- 80: Wandende
- 82: Konuswinkel
- 84: Randfläche
- 86: Innenfläche
- 88: Tiefenanschlag
- 90: Anschlagfläche
- 92: Zahnstumpfaufnahmehülse
- 94: Zahnstumpfaufnahmestabilisierungseinrichtung
- 96: Zahnstumpfaufnahmestabilisierungselement
- 98: Aufnahmestabilisierungssteg
- 100: Aufnahmestabilisierungswandabschnitt
- 102: Aufnahmelängsachse
- 104: Aufnahmewand
- 106: Aufnahmewanddicke
- 108: Aufnahmepositioniereinrichtung
- 110: Aufnahmepositionierelement
- 112: Aufnahmerückstelleinrichtung
- 114: Aufnahmerückstellelement
- 116: Aufnahmeauslenkachse
- 118: Aufnahmeführungselement
- 120: Verbindungslinie
- 122: Aufnahmeführungsvorsprung
- 124: Innenfläche
- 126: Aufnahmeaufgleitfläche
- 128: Ausnehmung
- 130: Aufnahmeende
- 132: Aufnahmespalt
- 134: Aufnahmespaltabschnitt
- 136: Aufnahmespaltabschnitt
- 138: Aufnahmequerschnittsebene
- 140: Aufnahmeneigungswinkel
- 142: Aufnahmespaltabschnitt
- 144: Aufnahmewandende
- 146: Aufnahmerand
- 148: Aufnahmekonuswinkel

## Patentansprüche

1. Zahnstumpf für ein Dentalmodell (10), welches Dentalmodell (10) mindestens einen Zahn und mindestens eine Zahnstumpfaufnahme (14) zum mindestens teilweisen Aufnehmen des Zahnstumpfs (16) umfasst, welcher Zahnstumpf (16) einen Zahnabschnitt (18) in Form eines menschlichen oder tierischen Zahnes und einen eine Kupplungsabschnittslängsachse (22) definierenden Kupplungsabschnitt (20) zum kraft- und/oder formschlüssigen in Eingriff Bringen mit der mindestens einen Zahnstumpfaufnahme (14) des Dentalmodells (10) in einer Kupplungsstellung umfasst, wobei der Zahnstumpf (16) eine Positioniereinrichtung (24) umfasst zum definierten räumlichen Positionieren des Zahnstumpfs (16) in der Zahnstumpfaufnahme (14) in der Kupplungsstellung, **dadurch gekennzeichnet, dass** die Positioniereinrichtung (24) mindestens ein am Kupplungsabschnitt (20) ausgebildetes Positionierelement (26) umfasst, dass das mindestens eine Positionierelement (26) aus einer Grundstellung entgegen der Wirkung einer Rückstelleinrichtung (28) in eine auf die Kupplungsabschnittslängsachse (22) oder im Wesentlichen auf die Kupplungsabschnittslängsachse (22) hin oder von dieser weg ausgelenkte Haltestellung auslenkbar ist, dass das mindestens eine Positionierelement (26) in der Haltestellung entgegen der Wirkung der Rückstelleinrichtung (28) aus der Grundstellung ausgelenkt ist, dass die Positioniereinrichtung (24) mindestens ein Führungselement (34) umfasst und dass das mindestens eine Führungselement (34) am mindestens einen Positionierelement (26) angeordnet oder ausgebildet ist.

2. Zahnstumpf nach Anspruch 1, **dadurch gekennzeichnet, dass** die Rückstelleinrichtung (28) mindestens ein Rückstellelement (30) umfasst, entgegen dessen Wirkung das mindestens eine Positionierelement (26) in die Haltestellung auslenkbar ist,
wobei insbesondere
a) das mindestens eine Rückstellelement (30) federelastisch oder im Wesentlichen federelastisch ausgebildet ist und/oder
b) das mindestens eine Positionierelement (26) das mindestens eine Rückstellelement (30) umfasst oder bildet.

3. Zahnstumpf nach einem der voranstehenden Ansprüche, **dadurch gekennzeichnet, dass**
a) das mindestens eine Positionierelement (26) federnd am Kupplungsabschnitt (20) gehalten oder ausgebildet oder gelagert ist und/oder
b) das mindestens eine Positionierelement (26) um eine parallel oder quer, insbesondere senkrecht, zur Kupplungsabschnittslängsachse (22) verlaufende Auslenkachse (32) verschwenkbar oder einrollbar oder ausrollbar ist
und/oder
c) der Zahnstumpf ein, zwei, drei, vier oder mehr Positionierelemente (26) umfasst
und/oder
d) eine Mehrzahl von Positionierelementen (26) vorgesehen ist, insbesondere zwei, drei oder vier, und dass die Positionierelemente (26) gleichmäßig über einen Umfang des Kupplungsabschnitts (20) verteilt angeordnet oder ausgebildet sind,
wobei insbesondere die Mehrzahl von Positionierelementen (26) bezogen auf die Kupplungsabschnittslängsachse (22) gleichsinnig orientiert am Kupplungsabschnitt (20) angeordnet oder ausgebildet ist.

4. Zahnstumpf nach einem der voranstehenden Ansprüche, **dadurch gekennzeichnet, dass** zwei oder mehr Führungselemente (34) am mindestens einen Positionierelement (26) angeordnet oder ausgebildet sind, wobei insbesondere eine Verbindungslinie (36) der zwei oder mehr Führungselemente (34) parallel zur Kupplungsabschnittslängsachse (22) verläuft.

5. Zahnstumpf nach einem der voranstehenden Ansprüche, **dadurch gekennzeichnet, dass**
a) das mindestens eine Führungselement (34) in Form eines Führungsvorsprungs (38) oder in Form einer Führungsnut ausgebildet ist
und/oder
b) das mindestens eine Führungselement (34) auf einer von der Kupplungsabschnittslängsachse (22) weg weisenden Außenfläche (40) des mindestens einen Positionierelements (26) angeordnet oder ausgebildet ist
und/oder
c) das mindestens eine Führungselement (34) eine in distaler Richtung weisende Aufgleitfläche (46) aufweist
und/oder
d) der Kupplungsabschnitt (20) in Form einer Kupplungshülse (48) ausgebildet ist
und/oder
e) der Kupplungsabschnitt (20) eine Kupplungsabschnittstabilisierungseinrichtung (54) umfasst,
wobei insbesondere die Kupplungsabschnittstabilisierungseinrichtung (54) von der Kupplungshülse (48) umgeben ist und/oder mindestens ein Kupplungsabschnittstabilisierungselement (56) umfasst
und/oder im Querschnitt bezogen auf die Kupplungsabschnittslängsachse (22) stern- oder kreuzförmig ausgebildet ist.

6. Zahnstumpf nach einem der voransehenden Ansprüche, **dadurch gekennzeichnet, dass** der Kupplungsabschnitt (20) distalseitig durch einen umlaufenden Rand (62) begrenzt ist und ein distalseitig über den Rand (62) vorstehendes Standelement (64) umfasst,
wobei insbesondere das Standelement (64)
a) plattenförmig ausgebildet ist
und/oder
b) bezogen auf die Kupplungsabschnittslängsachse (22) eine Standelementquerschnittsfläche definiert, wobei die Kupplungshülse (48) eine Kupplungshülsenquerschnittsfläche definiert und die Standelementquerschnittsfläche kleiner als die Kupplungshülsenquerschnittsfläche ist und/oder der Kupplungshülsenquerschnittsfläche geometrisch ähnlich ist.

7. Zahnstumpf nach einem der voranstehenden Ansprüche, **dadurch gekennzeichnet, dass**
a) der Kupplungsabschnitt (20) eine Grundquerschnittsform bezogen auf die Kupplungsabschnittslängsachse (22) aufweist, welche von einer Kreisform abweicht,
wobei insbesondere die Grundquerschnittsform oval oder vieleckig, insbesondere drei-, vier- oder fünfeckig ist,
und/oder
b) der Zahnstumpf (16) einstückig, insbesondere monolithisch, ausgebildet ist
und/oder
c) der Zahnstumpf (16) durch ein generatives Herstellungsverfahren ausgebildet ist, insbesondere durch 3D-Druck,
und/oder
d) der Zahnstumpf (16) aus einem Kunststoffmaterial ausgebildet ist.

8. Dentalmodell (10), insbesondere als Arbeits- und Kontrollmodell zur Anfertigung von Zahnersatz, welches Dentalmodell (10) einen Grundkörper (12) mit mindestens einer Zahnstumpfaufnahme (14) zum mindestens teilweisen Aufnehmen eines Zahnstumpfs (16) umfasst, welche Zahnstumpfaufnahme (14) eine Aufnahmelängsachse (102) definiert und zum kraft- und/oder formschlüssigen in Eingriff Bringen mit dem Zahnstumpf (16) in einer Kupplungsstellung ausgebildet ist, wobei die Zahnstumpfaufnahme (14) eine Aufnahmepositioniereinrichtung (108) umfasst zum definierten räumlichen Positionieren des Zahnstumpfs (16) in der Zahnstumpfaufnahme (14) in der Kupplungsstellung, **dadurch gekennzeichnet, dass** die Aufnahmepositioniereinrichtung (108) mindestens ein an der Zahnstumpfaufnahme (14) ausgebildetes Aufnahmepositionierelement (110) umfasst, dass das mindestens eine Aufnahmepositionierelement (110) aus einer Grundstellung entgegen der Wirkung einer Aufnahmerückstelleinrichtung (112) in eine auf die Aufnahmelängsachse (102) oder im Wesentlichen auf die Aufnahmelängsachse (102) hin oder von dieser weg ausgelenkte Haltestellung auslenkbar ist, dass das mindestens eine Aufnahmepositionierelement (110) in der Haltestellung entgegen der Wirkung der Aufnahmerückstelleinrichtung (112) aus der Grundstellung ausgelenkt ist, dass die Aufnahmepositioniereinrichtung (108) mindestens ein Aufnahmeführungselement (118) umfasst und dass das mindestens eine Aufnahmeführungselement (118) am mindestens einen Aufnahmepositionierelement (110) angeordnet oder ausgebildet ist.

9. Dentalmodell nach Anspruch 8, **dadurch gekennzeichnet, dass** die Aufnahmerückstelleinrichtung (112) mindestens ein Aufnahmerückstellelement (114) umfasst, entgegen dessen Wirkung das mindestens eine Aufnahmepositionierelement (110) in die Haltestellung auslenkbar ist, wobei insbesondere
a) das mindestens eine Aufnahmerückstellelement (114) federelastisch oder im Wesentlichen federelastisch ausgebildet ist,
und/oder
b) das mindestens eine Aufnahmepositionierelement (110) das mindestens eine Aufnahmerückstellelement (114) umfasst oder bildet.

10. Dentalmodell nach Anspruch 8 oder 9, **dadurch gekennzeichnet, dass**
a) das mindestens eine Aufnahmepositionierelement (110) federnd an der Zahnstumpfaufnahme (14) gehalten oder ausgebildet oder gelagert ist
und/oder
b) das mindestens eine Aufnahmepositionierelement (110) um eine parallel oder quer, insbesondere senkrecht, zur Aufnahmelängsachse (102) verlaufende Aufnahmeauslenkachse (116) verschwenkbar oder einrollbar oder ausrollbar ist
und/oder
c) das Dentalmodell ein, zwei, drei, vier oder mehr Aufnahmepositionierelemente (110) umfasst
und/oder
d) eine Mehrzahl von Aufnahmepositionierelementen (110) vorgesehen ist, insbesondere zwei, drei oder vier, und dass die Aufnahmepositionierelemente (110) gleichmäßig über einen Umfang der Zahnstumpfaufnahme (14) verteilt angeordnet oder ausgebildet sind,
wobei insbesondere die Mehrzahl von Aufnahmepositionierelementen (110) bezogen auf die Aufnahmelängsachse (102) gleichsinnig orientiert an der Zahnstumpfaufnahme (14) angeordnet oder ausgebildet ist.

11. Dentalmodell nach einem der Ansprüche 8 bis 10, **dadurch gekennzeichnet, dass** zwei oder mehr Aufnahmeführungselemente (118) am mindestens einen Aufnahmepositionierelement (110) angeordnet oder ausgebildet sind,
wobei insbesondere eine Verbindungslinie (120) der zwei oder mehr Aufnahmeführungselemente (118) parallel zur Aufnahmelängsachse (102) verläuft.

12. Dentalmodell nach einem der Ansprüche 8 bis 11, **dadurch gekennzeichnet, dass**
a) das mindestens eine Aufnahmeführungselement (118) in Form eines Aufnahmeführungsvorsprungs (122) oder in Form einer Aufnahmeführungsnut ausgebildet ist
und/oder
b) das mindestens eine Aufnahmeführungselement (118) auf einer auf die Aufnahmelängsachse (102) hin weisenden Innenfläche (124) des mindestens einen Aufnahmepositionierelements (110) angeordnet oder ausgebildet ist
und/oder
c) das mindestens eine Aufnahmeführungselement (118) eine in proximaler Richtung weisende Aufnahmeaufgleitfläche (126) aufweist
und/oder
d) die Zahnstumpfaufnahme (14) in Form einer Zahnstumpfaufnahmehülse (92) ausgebildet ist
und/oder
e) die Zahnstumpfaufnahme (14) eine Zahnstumpfaufnahmestabilisierungseinrichtung (94) umfasst,
wobei insbesondere die Zahnstumpfaufnahmestabilisierungseinrichtung (94) die Zahnstumpfaufnahmehülse (92) umgibt und/oder
mindestens ein Zahnstumpfaufnahmestabilisierungselement (96) umfasst.

13. Dentalmodell nach einem der Ansprüche 8 bis 12, **dadurch gekennzeichnet, dass** der Grundkörper (12)
a) einstückig, insbesondere monolithisch, ausgebildet ist
und/oder
b) durch ein generatives Herstellungsverfahren ausgebildet ist, insbesondere durch 3D-Druck,
und/oder
c) aus einem Kunststoffmaterial ausgebildet ist
und/oder
d) in Form eines Teils eines Kiefers ausgebildet ist.

14. Dentalmodell nach einem der Ansprüche 8 bis 13, **gekennzeichnet durch**
a) einen mit dem Grundkörper (12) in der Kupplungsstellung gekuppelten Zahnstumpf (16), welcher einen Zahnabschnitt (18) in Form eines Zahnes und einen Kupplungsabschnitt (20) umfasst, wobei der Kupplungsabschnitt (20) des Zahnstumpfs (16) mindestens teilweise, insbesondere vollständig, in der mindestens einen Zahnstumpfaufnahme (14) aufgenommen ist
oder
b) mindestens einen in der Zahnstumpfaufnahme (14) mindestens teilweise aufgenommenen Zahnstumpf (16),
wobei der Zahnstumpf (16) in Form eines Zahnstumpfs (16) nach einem der Ansprüche 1 bis 7 ausgebildet ist.

15. Dentalmodell (10), insbesondere als Arbeits- und Kontrollmodell zur Anfertigung von Zahnersatz, welches Dentalmodell (10) einen Grundkörper (12) und mindestens einen mit dem Grundkörper (12) in einer Kupplungsstellung gekuppelten Zahnstumpf (16) umfasst, welcher Zahnstumpf (16) einen Zahnabschnitt (18) in Form eines Zahnes und einen Kupplungsabschnitt (20) umfasst, welcher Grundkörper (12) mindestens eine Zahnstumpfaufnahme (14) aufweist, in welcher der Kupplungsabschnitt (20) des Zahnstumpfs (16) mindestens teilweise, insbesondere vollständig, aufgenommen ist, **dadurch gekennzeichnet, dass** der Zahnstumpf (16) in Form eines Zahnstumpfs (16) nach einem der Ansprüche 1 bis 7 ausgebildet ist.

## Claims

1. Tooth stump for a dental model (10), which dental model (10) comprises at least one tooth and at least one tooth stump receptacle (14) for at least partially receiving the tooth stump (16), which tooth stump (16) comprises a tooth portion (18) in the form of a human or animal tooth and a coupling portion (20) defining a coupling portion longitudinal axis (22) for force-locking and/or positive-locking engagement with the at least one tooth stump receptacle (14) of the dental model (10) in a coupling position, the tooth stump (16) comprising a positioning device (24) for defined spatial positioning of the tooth stump (16) in the tooth stump receptacle (14) in the coupling position, **characterised in that** the positioning device (24) comprises at least one positioning element (26) formed on the coupling portion (20), **in that** the at least one positioning element (26) can be deflected from a basic position against the action of a restoring device (28) into a holding position displaced towards or away from the coupling portion longitudinal axis (22) or substantially towards or away from the coupling portion longitudinal axis (22), **in that** the at least one positioning element (26), when it is in the holding position, is deflected from the basic position against the action of the restoring device (28), **in that** the positioning device (24) comprises at least one guide element (34), and **in that** the at least one guide element (34) is arranged or formed on the at least one positioning element (26).

2. Tooth stump in accordance with claim 1, **characterised in that** the restoring device (28) comprises at least one restoring element (30), against the action of which the at least one positioning element (26) can be deflected into the holding position,
wherein in particular
a) the at least one restoring element (30) is spring-elastic or substantially spring-elastic
and/or
b) the at least one positioning element (26) comprises or forms at least one restoring element (30).

3. Tooth stump in accordance with any one of the preceeding claims, **characterised in that**
a) the at least one positioning element (26) is held or formed or supported on the coupling portion (20) resiliently
and/or
b) the at least one positioning element (26) can be pivoted or rolled in or rolled out about a deflection axis (32) running parallel or transversely, in particular perpendicularly, to the coupling portion longitudinal axis (22)
and/or
c) the tooth stump comprises one, two, three, four or more positioning elements (26)
and/or
d) a plurality of positioning elements (26) is provided, in particular two, three or four, and **in that** the positioning elements (26) are arranged or formed evenly distributed over a periphery of the coupling portion (20),
wherein in particular the plurality of positioning elements (26) is arranged or formed on the coupling portion (20) so as to be oriented in the same direction in relation to the coupling portion longitudinal axis (22).

4. Tooth stump in accordance with any one of the preceeding claims, **characterised in that** two or more guide elements (34) are arranged or formed on the at least one positioning element (26),
wherein in particular a connecting line (36) of the two or more guide elements (34) runs parallel to the coupling portion longitudinal axis (22).

5. Tooth stump in accordance with any one of the preceeding claims, **characterised in that**
a) the at least one guide element (34) is configured in the form of a guide protrusion (38) or in the form of a guide groove
and/or
b) the at least one guide element (34) is arranged or formed on an outer surface (40) of the at least one positioning element (26) facing away from the coupling portion longitudinal axis (22)
and/or
c) the at least one guide element (34) has a sliding surface (46) facing in the distal direction
and/or
d) the coupling portion (20) is configured in the form of a coupling sleeve (48)
and/or
e) the coupling portion (20) comprises a coupling portion stabilising device (54),
wherein in particular the coupling portion stabilising device (54) is surrounded by the coupling sleeve (48) and/or comprises at least one coupling portion stabilising element (56)
and/or is star-shaped or cross-shaped in cross-section in relation to the coupling portion longitudinal axis (22).

6. Tooth stump in accordance with any one of the preceeding claims, **characterised in that** the coupling portion (20) is delimited on the distal side by a peripheral edge (62) and comprises a stand element (64) protruding distally beyond the edge (62),
wherein in particular the stand element (64)
a) is planar
and/or
b) defines a stand element cross-sectional area in relation to the coupling portion longitudinal axis (22), wherein the coupling sleeve (48) defines a coupling sleeve cross-sectional area, and the stand element cross-sectional area is smaller than the coupling sleeve cross-sectional area and/or is geometrically similar to the coupling sleeve cross-sectional area.

7. Tooth stump in accordance with any one of the preceeding claims, **characterised in that**
a) the coupling portion (20) has a basic cross-sectional shape in relation to the coupling portion longitudinal axis (22) which deviates from a circular shape,
wherein in particular the basic cross-sectional shape is oval or polygonal, in particular triangular, quadrangular or pentagonal,
and/or
b) the tooth stump (16) is formed in one piece, in particular monolithically,
and/or
c) the tooth stump (16) is formed by an additive manufacturing process, in particular by 3D printing,
and/or
d) the tooth stump (16) is formed from a plastics material.

8. Dental model (10), in particular as a working and control model for the production of dental prostheses, which dental model (10) comprises a main body (12) with at least one tooth stump receptacle (14) for at least partially receiving a tooth stump (16), which tooth stump receptacle (14) defines a receptacle longitudinal axis (102) and is configured for force-locking and/or positive-locking engagement with the tooth stump (16) in a coupling position, the tooth stump receptacle (14) comprising a receptacle positioning device (108) for the defined spatial positioning of the tooth stump (16) in the tooth stump receptacle (14) in the coupling position, **characterised in that** the receptacle positioning device (108) comprises at least one receptacle positioning element (110) formed on the tooth stump receptacle (14), **in that** the at least one receptacle positioning element (110) can be deflected from a basic position against the action of a receptacle restoring device (112) into a holding position displaced towards or away from the receptacle longitudinal axis (102) or substantially towards or away from the receptacle longitudinal axis (102), **in that** the at least one receptacle positioning element (110), when it is in the holding position, is deflected from the basic position against the action of the receptacle restoring device (112), **in that** the receptacle positioning device (108) comprises at least one receptacle guide element (118), and **in that** the at least one receptacle guide element (118) is arranged or formed on the at least one receptacle positioning element (110).

9. Dental model in accordance with claim 8, **characterised in that** the receptacle restoring device (112) comprises at least one receptacle restoring element (114), against the action of which the at least one receptacle positioning element (110) can be deflected into the holding position,
wherein in particular
a) the at least one receptacle restoring element (114) is spring-elastic or substantially spring-elastic
and/or
b) the at least one receptacle positioning element (110) comprises or forms at least one receptacle restoring element (114).

10. Dental model in accordance with claim 8 or 9, **characterised in that**
a) the at least one receptacle positioning element (110) is held or formed or supported on the tooth stump receptacle (14) resiliently
and/or
b) the at least one receptacle positioning element (110) can be pivoted or rolled in or rolled out about a receptacle deflection axis (116) running parallel or transversely, in particular perpendicularly, to the receptacle longitudinal axis (102)
and/or
c) the dental model comprises one, two, three, four or more receptacle positioning elements (110)
and/or
d) a plurality of receptacle positioning elements (110) is provided, in particular two, three or four, and **in that** the receptacle positioning elements (110) are arranged or formed evenly distributed over a periphery of the tooth stump receptacle (14)
wherein in particular the plurality of receptacle positioning elements (110) is arranged or formed on the tooth stump receptacle (14) so as to be oriented in the same direction in relation to the receptacle longitudinal axis (102).

11. Dental model in accordance with any one of claims 8 to 10, **characterised in that** two or more receptacle guide elements (118) are arranged or formed on the at least one receptacle positioning element (110), wherein in particular a connecting line of the two or more receptacle guide elements (118) runs parallel to the receptacle longitudinal axis (102).

12. Dental model in accordance with any one of claims 8 to 11, **characterised in that**
a) the at least one receptacle guide element (118) is configured in the form of a receptacle guide protrusion (122) or in the form of a receptacle guide groove
and/or
b) the at least one receptacle guide element (118) is arranged or formed on an inner surface (124) of the at least one receptacle positioning element (110) facing towards the receptacle longitudinal axis (102)
and/or
c) the at least one receptacle guide element (118) has a receptacle sliding surface (126) facing in the proximal direction
and/or
d) the tooth stump receptacle (14) is configured in the form of a tooth stump receiving sleeve (92)
and/or
e) the tooth stump receptacle (14) comprises a tooth stump receptacle stabilising device (94),
wherein in particular the tooth stump receptacle stabilising device (94) surrounds the tooth stump receiving sleeve (92)
and/or
comprises at least one tooth stump receptacle stabilising element (96).

13. Dental model in accordance with any one of claims 8 to 12, **characterised in that** the main body (12)
a) is formed in one piece, in particular monolithically,
and/or
b) is formed by an additive manufacturing process, in particular by 3D printing,
and/or
c) is made of a plastics material
and/or
d) is configured in the form of a part of a jaw.

14. Dental model in accordance with any one of claims 8 to 13, **characterised by**
a) a tooth stump (16) which is coupled to the main body (12) in the coupling position and which comprises a tooth portion (18) in the form of a tooth and a coupling portion (20), the coupling portion (20) of the tooth stump (16) being received at least partially, in particular completely, in the at least one tooth stump receptacle (14)
or
b) at least one tooth stump (16) at least partially received in the tooth stump receptacle (14),
wherein the tooth stump (16) is configured in the form of a tooth stump (16) in accordance with anyone of claims 1 to 7.

15. Dental model (10), in particular as a working and control model for the production of dental prostheses, which dental model (10) comprises a main body (12) and at least one tooth stump (16) coupled to the main body (12) in a coupling position, which tooth stump (16) comprises a tooth portion (18) in the form of a tooth and a coupling portion (20), which main body (12) has at least one tooth stump receptacle (14), in which the coupling portion (20) of the tooth stump (16) is received at least partially, in particular completely, **characterised in that** the tooth stump (16) is configured in the form of a tooth stump (16) in accordance with any one of claims 1 to 7.

## Revendications

1. Moignon dentaire pour un modèle dentaire (10), lequel modèle dentaire (10) comprend au moins une dent et au moins un logement de moignon dentaire (16) pour loger au moins partiellement le moignon dentaire (16), lequel moignon dentaire (14) comprend une section de dent (18) sous la forme d'une dent humaine ou animale et une section d'accouplement (20) définissant un axe longitudinal de section d'accouplement (22) pour amener en prise par coopération de force et/ou de forme dans une position d'accouplement avec le au moins un logement de moignon dentaire (14) du modèle dentaire (10), dans lequel le moignon dentaire (16) comprend un équipement de positionnement (24) pour le positionnement spatial défini du moignon dentaire (16) dans le logement de moignon dentaire (14) dans la position d'accouplement, **caractérisé en ce que** l'équipement de positionnement (24) comprend au moins un élément de positionnement (26) conçu au niveau de la section d'accouplement (20), **en ce que** le au moins un élément de positionnement (26) peut être articulé depuis une position de base contre l'action d'un équipement de rappel (28) jusque dans une position de retenue articulée en allant vers l'axe longitudinal de section d'accouplement (22) ou essentiellement vers l'axe longitudinal de section d'accouplement (22) ou en s'éloignant de celui-ci, **en ce que** le au moins un élément de positionnement (26) est articulé hors de la position de base dans la position de retenue contre l'action de l'équipement de rappel (28), **en ce que** l'équipement de positionnement (24) comprend au moins un élément de guidage (34) et **en ce que** le au moins un élément de guidage (34) est agencé ou conçu au niveau du au moins un élément de positionnement (26).

2. Moignon dentaire selon la revendication 1, **caractérisé en ce que** l'équipement de rappel (28) comprend au moins un élément de rappel (30), contre l'action duquel le au moins un élément de positionnement (26) peut être articulé jusque dans la position de retenue,
dans lequel en particulier
a) le au moins un élément de rappel (30) est conçu avec une élasticité de ressort ou essentiellement avec une élasticité de ressort
et/ou
b) le au moins un élément de positionnement (26) comprend ou forme le au moins un élément de rappel (30).

3. Moignon dentaire selon l'une des revendications précédentes, **caractérisé en ce que**
a) le au moins un élément de positionnement (26) est retenu ou conçu ou monté élastiquement contre la section d'accouplement (20)
et/ou
b) le au moins un élément de positionnement (26) peut être articulé ou enroulé ou déroulé autour d'un axe d'articulation (32) se déroulant parallèlement ou transversalement, en particulier perpendiculairement, à l'axe longitudinal de section d'accouplement (22)
et/ou
c) le moignon dentaire comprend un, deux, trois, quatre ou davantage d'éléments de positionnement (26)
et/ou
d) une pluralité d'éléments de positionnement (26) est prévue, en particulier deux, trois ou quatre, et **en ce que** les éléments de positionnement (26) sont agencés ou conçus de façon uniformément répartie sur une périphérie de la section d'accouplement (20),
dans lequel en particulier la pluralité d'éléments de positionnement (26) est agencée ou conçue au niveau de la section d'accouplement (20) de façon à être orientée dans le même sens par rapport à l'axe longitudinal de section d'accouplement (22).

4. Moignon dentaire selon l'une des revendications précédentes, **caractérisé en ce que** deux ou plusieurs éléments de guidage (34) sont agencés ou conçus au niveau du au moins un élément de positionnement (26), dans lequel en particulier une ligne de liaison (36) des deux ou plusieurs éléments de guidage (34) se déroule parallèlement à l'axe longitudinal de section d'accouplement (22).

5. Moignon dentaire selon l'une des revendications précédentes, **caractérisé en ce que**
a) le au moins un élément de guidage (34) est conçu sous la forme d'une saillie de guidage (38) ou sous la forme d'une rainure de guidage
et/ou
b) le au moins un élément de guidage (34) est agencé ou conçu sur une surface extérieure (40) du au moins un élément de positionnement (26), laquelle surface extérieure s'éloigne de l'axe longitudinal de section d'accouplement (22)
et/ou
c) le au moins un élément de guidage (34) présente une surface de glissement (46) pointant dans la direction distale
et/ou
d) la section d'accouplement (20) est conçue sous la forme d'un manchon d'accouplement (48)
et/ou
e) la section d'accouplement (20) comprend un équipement de stabilisation de section d'accouplement (54),
dans lequel en particulier l'équipement de stabilisation de section d'accouplement (54) est entouré par le manchon d'accouplement (48)
et/ou comprend au moins un élément de stabilisation de section d'accouplement (56)
et/ou est conçu, en coupe transversale par rapport à l'axe longitudinal de section d'accouplement (22), en forme d'étoile ou de croix.

6. Moignon dentaire selon l'une des revendications précédentes, **caractérisé en ce que** la section d'accouplement (20) est délimitée du côté distal par un bord (62) périphérique et comprend un élément support (64) faisant saillie par-dessus le bord (62) du côté distal,
dans lequel en particulier l'élément support (64)
a) est conçu en forme de plaque
et/ou
b) définit une surface transversale d'élément support par rapport à l'axe longitudinal de section d'accouplement (22), dans lequel le manchon d'accouplement (48) définit une surface transversale de manchon d'accouplement et la surface transversale d'élément support est plus petite que la surface transversale de manchon d'accouplement et/ou est géométriquement semblable à la surface transversale de manchon d'accouplement.

7. Moignon dentaire selon l'une des revendications précédentes, **caractérisé en ce que**
a) la section d'accouplement (20) présente une forme de coupe transversale de base par rapport à l'axe longitudinal de section d'accouplement (22), laquelle diffère d'une forme circulaire,
dans lequel en particulier la forme de coupe transversale de base est ovale ou polygonale, en particulier triangulaire, quadrangulaire ou pentagonale,
et/ou
b) le moignon dentaire (16) est conçu en une seule pièce, en particulier de façon monolithique,
et/ou
c) le moignon dentaire (16) est conçu par un procédé de fabrication génératif, en particulier par impression 3D,
et/ou
d) le moignon dentaire (16) est conçu dans un matériau plastique.

8. Modèle dentaire (10), en particulier en tant que modèle de travail et de commande pour la réalisation d'une prothèse dentaire, lequel modèle dentaire (10) comprend un corps de base (12) avec au moins un logement de moignon dentaire (14) pour loger au moins partiellement un moignon dentaire (16), lequel logement de moignon dentaire (14) définit un axe longitudinal de logement (102) et est conçu pour amener en prise par coopération de force et/ou de forme dans une position d'accouplement avec le moignon dentaire (16), dans lequel le logement de moignon dentaire (14) comprend un équipement de positionnement de logement (108) pour le positionnement spatial défini du moignon dentaire (16) dans le logement de moignon dentaire (14) dans la position d'accouplement, **caractérisé en ce que** l'équipement de positionnement de logement (108) comprend au moins un élément de positionnement de logement (110) conçu au niveau du logement de moignon dentaire (14), **en ce que** le au moins un élément de positionnement de logement (110) peut être articulé depuis une position de base contre l'action d'un équipement de rappel de logement (112) jusque dans une position de retenue articulée en allant vers l'axe longitudinal de logement (102) ou essentiellement vers l'axe longitudinal de logement (102) ou en s'éloignant de celui-ci, **en ce que** le au moins un élément de positionnement de logement (110) est articulé hors de la position de base dans la position de retenue contre l'action de l'équipement de rappel de logement (112), **en ce que** l'équipement de positionnement de logement (108) comprend au moins un élément de guidage de logement (118) et **en ce que** le au moins un élément de guidage de logement (118) est agencé ou conçu au niveau du au moins un élément de positionnement de logement (110).

9. Modèle dentaire selon la revendication 8, **caractérisé en ce que** l'équipement de rappel de logement (112) comprend au moins un élément de rappel de logement (114), contre l'action duquel le au moins un élément de positionnement de logement (110) peut être articulé jusque dans la position de retenue,
dans lequel en particulier
a) le au moins un élément de rappel de logement (114) est conçu avec une élasticité de ressort ou essentiellement avec une élasticité de ressort,
et/ou
b) le au moins un élément de positionnement de logement (110) comprend ou forme le au moins un élément de rappel de logement (114).

10. Modèle dentaire selon la revendication 8 ou 9, **caractérisé en ce que**
a) le au moins un élément de positionnement de logement (110) est retenu ou conçu ou monté élastiquement contre le logement de moignon dentaire (14)
et/ou
b) le au moins un élément de positionnement de logement (110) peut être articulé ou enroulé ou déroulé autour d'un axe d'articulation de logement (116) se déroulant parallèlement ou transversalement, en particulier perpendiculairement, à l'axe longitudinal de logement (102)
et/ou
c) le moignon dentaire comprend un, deux, trois, quatre ou davantage d'éléments de positionnement de logement (110) et/ou
d) une pluralité d'éléments de positionnement de logement (110) est prévue, en particulier deux, trois ou quatre, et **en ce que** les éléments de positionnement de logement (110) sont agencés ou conçus de façon uniformément répartie sur une périphérie du logement de moignon dentaire (14),
dans lequel en particulier la pluralité d'éléments de positionnement de logement (110) est agencée ou conçue au niveau du logement de moignon dentaire (14) de façon à être orientée dans le même sens par rapport à l'axe longitudinal de logement (102).

11. Modèle dentaire selon l'une des revendications 8 à 10, **caractérisé en ce que** deux ou plusieurs éléments de guidage de logement (118) sont agencés ou conçus au niveau du au moins un élément de positionnement de logement (110),
dans lequel en particulier une ligne de liaison (120) des deux ou plusieurs éléments de guidage de logement (118) se déroule parallèlement à l'axe longitudinal de logement (102).

12. Modèle dentaire selon l'une des revendications 8 à 11, **caractérisé en ce que**
a) le au moins un élément de guidage de logement (118) est conçu sous la forme d'une saillie de guidage de logement (122) ou sous la forme d'une rainure de guidage de logement
et/ou
b) le au moins un élément de guidage de logement (118) est agencé ou conçu sur une surface intérieure (124) du au moins un élément de positionnement de logement (110), laquelle surface intérieure va vers l'axe longitudinal de logement (102)
et/ou
c) le au moins un élément de guidage de logement (118) présente une surface de glissement de logement (126) pointant dans la direction proximale
et/ou
d) le logement de moignon dentaire (14) est conçu sous la forme d'un
manchon de logement de moignon dentaire (92) et/ou
e) le logement de moignon dentaire (14) comprend un équipement de stabilisation de logement de moignon dentaire (94),
dans lequel en particulier l'équipement de stabilisation de logement de moignon dentaire (94) entoure le manchon de logement de moignon dentaire (92)
et/ou
comprend au moins un élément de stabilisation de logement de moignon dentaire (96).

13. Modèle dentaire selon l'une des revendications 8 à 12, **caractérisé en ce que** le corps de base (12)
a) est conçu en une seule pièce, en particulier de façon monolithique, et/ou
b) est conçu [par] un procédé de fabrication génératif, en particulier par impression 3D,
et/ou
c) est conçu dans un matériau plastique
et/ou
d) est conçu sous la forme d'une partie d'une mâchoire.

14. Modèle dentaire selon l'une des revendications 8 à 13, **caractérisé par**
a) un moignon dentaire (16) couplé au corps de base (12) dans la position d'accouplement, lequel moignon dentaire comprend une section de dent (18) sous la forme d'une dent et une section d'accouplement (20), dans lequel la section d'accouplement (20) du moignon dentaire (16) est logée au moins partiellement, en particulier complètement, dans le au moins un logement de moignon dentaire (14)
ou
b) au moins un moignon dentaire (16) logé au moins partiellement dans le logement de moignon dentaire (14),
dans lequel le moignon dentaire (16) est conçu sous la forme d'un moignon dentaire (16) selon l'une des revendications 1 à 7.

15. Modèle dentaire (10), en particulier en tant que modèle de travail et de commande pour la réalisation d'une prothèse dentaire, lequel modèle dentaire (10) comprend un corps de base (12) et au moins un moignon dentaire (16) couplé au corps de base (12) dans une position d'accouplement, lequel moignon dentaire (16) comprend une section de dent (18) sous la forme d'une dent et une section d'accouplement (20), lequel corps de base (12) présente au moins un logement de moignon dentaire (14), dans lequel la section d'accouplement (20) du moignon dentaire (16) est logée au moins partiellement, en particulier complètement, **caractérisé en ce que** le moignon dentaire (16) est conçu sous la forme d'un moignon dentaire (16) selon l'une des revendications 1 à 7.
